(19)

**Europäisches Patentamt**
**European Patent Office**
**Office européen des brevets**

(11) **EP 2 315 441 A1**

(12) **EUROPEAN PATENT APPLICATION**
published in accordance with Art. 153(4) EPC

(43) Date of publication:
**27.04.2011 Bulletin 2011/17**

(21) Application number: **09797912.4**

(22) Date of filing: **14.07.2009**

(51) Int Cl.:
***H04N 7/173*** (2011.01)

(86) International application number:
**PCT/JP2009/062736**

(87) International publication number:
**WO 2010/007987 (21.01.2010 Gazette 2010/03)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(30) Priority: **15.07.2008 JP 2008183813**
**27.01.2009 JP 2009015429**

(71) Applicant: **Sharp Kabushiki Kaisha**
**Osaka-shi, Osaka 545-8522 (JP)**

(72) Inventors:
• **TOKUMO, Yasuaki**
**Osaka-shi, Osaka 545-8522 (JP)**

• **OGISAWA, Yoshiaki**
**Osaka-shi, Osaka 545-8522 (JP)**
• **IWANAMI, Takuya**
**Osaka-shi, Osaka 545-8522 (JP)**
• **ITOH, Norio**
**Osaka-shi, Osaka 545-8522 (JP)**
• **WATANABE, Shuhichi**
**Osaka-shi, Osaka 545-8522 (JP)**
• **HASEGAWA, Shinya**
**deceased (JP)**
• **YOSHI, Takashi**
**deceased (JP)**

(74) Representative: **Müller - Hoffmann & Partner**
**Patentanwälte**
**Innere Wiener Strasse 17**
**81667 München (DE)**

(54) **DATA TRANSMISSION DEVICE, DATA RECEPTION DEVICE, METHOD FOR TRANSMITTING DATA, METHOD FOR RECEIVING DATA, AND METHOD FOR CONTROLLING AUDIO-VISUAL ENVIRONMENT**

(57)     Provided are a data transmission device, a data reception device, a method for transmitting data, a method for receiving data, and a method for controlling audio-visual environment that carry out the control of peripheral devices in consistence with contents producer's intention, thereby realizing the listening/viewing of the contents with a realistic sensation. The data transmission device is comprised of a video coding unit (101), an audio coding unit (102), an audio-visual environment control data coding unit (103), an audio-visual environment control data input unit (104), a data multiplexing unit (105) and a transmission unit (106). A control designation value for the peripheral devices and producer's preference information indicative of an acceptable error range for the control designation value are inputted from the audio-visual environment control data input unit (104), as audio-visual environment control data for one or more peripheral devices in an audio-visual environmental space where video data and/or audio data are reproduced, and the control designation value and the preference information are transmitted together with the video data and/or the audio data.

FIG. 1

**Description**

TECHNICAL FIELD

The present invention relates to a data transmitting apparatus, a data receiving apparatus, a data transmitting method, a data receiving method, and an audio-visual environment controlling method that transmits/receives data for making various peripheral devices work in conjunction with a video/sound content in order to realize viewing/listening of a content with a highly realistic sensation.

BACKGROUND OF THE INVENTION

In recent years, a method is proposed that realizes viewing/listening of a content with a highly realistic sensation by making various peripheral devices such as a lighting, a fan, and an air conditioner work in an audio-visual space in conjunction with a video/sound content. For example, Patent documents 1 and 2 disclose a lighting controlling method for controlling audio-visual environment lighting in conjunction with an image displayed on an image display device to thereby obtain a highly realistic sensation.

RELATED ART DOCUMENTS

PATENT DOCUMENTS

[Patent document 1] Japanese Laid-Open Patent Publication No. 2000-173783
[Patent document 2] Japanese Laid-Open Patent Publication No. 2001-343900

DISCLOSURE OF THE INVENTION

PROBLEMS TO BE SOLVED BY THE INVENTION

However, in the conventional method, when the specification of a lighting device of a user does not strictly support lighting conditions (such as brightness and a color temperature of lighting, for example) intended by a producer of contents, it has been difficult for the user to judge whether or not to turn the lights on. Moreover, the user needs to adjust execution of an additional effect, such as a lighting, that brings a highly realistic sensation and has to perform setting of operations of peripheral devices for each viewing/listening because of the reason such as a concern for others depending on a time, a place, and a state when viewing/listening these contents.

The present invention has been made to solve the above problems and an obj ect thereof is to provide a data transmitting apparatus, a data receiving apparatus, a data transmitting method, a data receiving method, and an audio-visual environment controlling method that control peripheral devices in accordance with an intention of a content producer to realize viewing/listening of a content with a highly realistic sensation.

MEANS FOR SOLVING THE PROBLEMS

In order to solve the above problems, a first technical means of the present invention is a data transmitting apparatus comprising transmitting means for multiplexing and transmitting video data and/or sound data, and audio-visual environment control data for one or more peripheral device in an audio-visual environment space where the video data and/or the sound data is reproduced, wherein the audio-visual environment control data includes a control designation value for the peripheral device, and producer preference information indicating an error permission range for the control designation value.

A second technical means of the present invention is the data transmitting apparatus comprising transmitting means for transmitting multiplexed data in which video data and/or sound data, and identification information for identifying audio-visual environment control data for one or more peripheral device in an audio-visual environment space where the video data and/or the sound data is reproduced are multiplexed, and the audio-visual environment control data, wherein the audio-visual environment control data includes a control designation value for the peripheral device, and producer preference information indicating an error permission range for the control designation value.

A third technical means of the present invention is the data transmitting apparatus comprising transmitting means for transmitting, upon reception of a request from outside, audio-visual environment control data for one or more peripheral device in an audio-visual environment space where predetermined video data and/or sound data is reproduced, wherein the audio-visual environment control data includes a control designation value for the peripheral device, and producer preference information indicating an error permission range for the control designation value.

A fourth technical means of the present invention is the data transmitting apparatus as defined in any one of the first to third technical means, wherein the producer preference information includes permission type information for allowing to control the peripheral device only using the control designation value.

A fifth technical means of the present invention is the data transmitting apparatus as defined in any one of the first to third technical means, wherein the producer preference information includes permission type information for allowing to control the peripheral device using a value under the control designation value.

A sixth technical means of the present invention is the data transmitting apparatus as defined in any one of the first to third technical means, wherein the producer preference information includes permission type information for allowing to control the peripheral device using a value over the control designation value.

A seventh technical means of the present invention is the data transmitting apparatus as defined in any one of first to third technical means, wherein the producer preference information includes permission type information for allowing to control the peripheral device using a value within a predetermined range including the control designation value.

An eighth technical means of the present invention is the data transmitting apparatus as defined in any one of fifth to seventh technical means, wherein the producer preference information includes proximity permission range information indicating a range in which the value is allowed in a ratio to the control designation value.

A ninth technical means of the present invention is the data transmitting apparatus as defined in any one of first to eighth technical means, wherein the control designation value is represented by a quantized value.

A tenth technical means of the present invention is the data transmitting apparatus as defined in any one of first to ninth technical means, wherein the producer preference information is described as an XML attribute.

A eleventh technical means of the present invention is the data transmitting apparatus as defined in any one of first to ninth technical means, wherein the producer preference information is described as an XML element.

A twelfth technical means of the present invention is the data transmitting apparatus as defined in any one of first to eleventh technical means, wherein the audio-visual environment control data is described by a scene unit of the video data.

A thirteenth technical means of the present invention is the data transmitting apparatus as defined in any one of first to eleventh technical means, wherein the audio-visual environment control data is described by a shot unit of the video data.

A fourteenth technical means of the present invention is the data transmitting apparatus as defined in any one of first to eleventh technical means, wherein the audio-visual environment control data is described by a frame unit of the video data.

A fifteenth technical means of the present invention is the data transmitting apparatus as defined in any one of first to fourteenth technical means, wherein the audio-visual environment control data is lighting control data for one or more lighting device in the audio-visual environment space.

A sixteenth technical means of the present invention is a data receiving apparatus comprising receiving means for receiving multiplexed data including video data and/or sound data, and audio-visual environment control data for one or more peripheral device in an audio-visual environment space where the video data and/or the sound data is reproduced, wherein the audio-visual environment control data includes a control designation value for the peripheral device, and producer preference information indicating an error permission range for the control designation value.

A seventeenth technical means of the present invention is a data receiving apparatus comprising receiving means for receiving multiplexed data including video data and/or sound data, and identification information for identifying audio-visual environment control data for one or more peripheral device in an audio-visual environment space where the video data and/or the sound data is reproduced, and receiving the audio-visual environment control data based on the identification information, wherein the audio-visual environment control data includes a control designation value for the peripheral device, and producer preference information indicating an error permission range for the control designation value.

An eighteenth technical means of the present invention is a data receiving apparatus comprising receiving means for receiving video data and/or sound data, and receiving audio-visual environment control data for one or more peripheral device in an audio-visual environment space where the video data and/or the sound data is reproduced based on a user request, wherein the audio-visual environment control data includes a control designation value for the peripheral device, and producer preference information indicating an error permission range for the control designation value.

A nineteenth technical means of the present invention is the data receiving apparatus as defined in any one of sixteenth to eighteenth technical means, wherein the producer preference information includes permission type information for allowing to control the peripheral device only with the control designation value.

A twentieth technical means of the present invention is the data receiving apparatus as defined in any one of sixteenth to eighteenth technical means, wherein the producer preference information includes permission type information for allowing to control the peripheral device using a value under the control designation value.

A twenty-first technical means of the present invention is the data receiving apparatus as defined in any one of sixteenth to eighteenth technical means, wherein the producer preference information includes permission type information for allowing to control the peripheral device using a value over the control designation value.

A twenty-second technical means of the present invention is the data receiving apparatus as defined in any one of sixteenth to eighteenth technical means, wherein the producer preference information includes permission type information for allowing to control the peripheral device using a value within a predetermined range including the control designation value.

A twenty-third technical means of the present invention is the data receiving apparatus as defined in any one of twentieth to twenty-second technical means, wherein the producer preference information includes proximity permission range information indicating a range in which the value is allowed in a ratio to the control designation value.

A twenty-fourth technical means of the present invention is the data receiving apparatus as defined in any one of sixteenth to twenty-third technical means, wherein the control designation value is represented by a quantized value.

A twenty-fifth technical means of the present invention is the data receiving apparatus as defined in any one of sixteenth to twenty-fourth technical means, wherein the producer preference information is shown by an XML attribute.

A twenty-sixth technical means of the present invention is the data receiving apparatus as defined in any one of sixteenth to twenty-fourth technical means, wherein the producer preference information is shown by an XML element.

A twenty-seventh technical means of the present invention is the data receiving apparatus as defined in any one of sixteenth to twenty-sixth technical means, wherein the audio-visual environment control data is shown by a scene unit of the video data.

A twenty-eighth technical means of the present invention is the data receiving apparatus as defined in any one of sixteenth to twenty-sixth technical means, wherein the audio-visual environment control data is shown by a shot unit of the video data.

A twenty-ninth technical means of the present invention is the data receiving apparatus as defined in any one of sixteenth to twenty-sixth technical means, wherein the audio-visual environment control data is shown by a frame unit of the video data.

A thirtieth technical means of the present invention is the data receiving apparatus as defined in any one of sixteenth to twenty-ninth technical means, wherein the audio-visual environment control data is lighting control data for one or more lighting device in the audio-visual environment space.

A thirty-first technical means of the present invention is the data receiving apparatus as defined in any one of sixteenth to thirtieth technical means, further comprising acquiring means for acquiring user preference data for restricting operations of the peripheral device based on the audio-visual environment control data.

A thirty-second technical means of the present invention is the data receiving apparatus as defined in thirty-first technical means, wherein the user preference data includes availability of operation information for the peripheral device and/or restriction information for the control designation value.

A thirty-third technical means of the present invention is the data receiving apparatus as defined in thirty-first or thirty-second technical means, wherein the user preference data includes audio-visual environment information describing conditions for applying the user preference data.

A thirty-fourth technical means of the present invention is the data receiving apparatus as defined in thirty-third technical means, wherein the audio-visual environment information includes information of a time and/or a place to which the user preference data is applied.

A thirty-fifth technical means of the present invention is a data transmitting method for multiplexing and transmitting video data and/or sound data, and audio-visual environment control data for one or more peripheral device in an audio-visual environment space where the video data and/or the sound data is reproduced, wherein the audio-visual environment control data includes a control designation value for the peripheral device, and producer preference information indicating an error permission range for the control designation value.

A thirty-sixth technical means of the present invention is a data transmitting method for transmitting multiplexed data in which video data and/or sound data, and identification information for identifying audio-visual environment control data for one or more peripheral device in an audio-visual environment space where the video data and/or the sound data is reproduced are multiplexed, and the audio-visual environment control data, wherein the audio-visual environment control data includes a control designation value for the peripheral device, and producer preference information indicating an error permission range for the control designation value.

A thirty-seventh technical means of the present invention is a data transmitting method for transmitting, upon reception of a request from outside, audio-visual environment control data for one or more peripheral device in an audio-visual environment space where predetermined video data and/or sound data is reproduced, wherein the audio-visual environment control data includes a control designation value for the peripheral device, and producer preference information indicating an error permission range for the control designation value.

A thirty-eighth technical means of the present invention is a data receiving method for receiving multiplexed data including video data and/or sound data, and audio-visual environment control data for one or more peripheral device in an audio-visual environment space where the video data and/or the sound data is reproduced, wherein the audio-visual environment control data includes a control designation value for the peripheral device, and producer preference information indicating an error permission range for the control designation value.

A thirty-ninth technical means of the present invention is a data receiving method for receiving multiplexed data including video data and/or sound data, and identification information for identifying audio-visual environment control data for one or more peripheral device in an audio-visual environment space where the video data and/or the sound data is reproduced, and receiving the audio-visual environment control data based on the identification information, wherein the audio-visual environment control data includes a control designation value for the peripheral device, and producer preference information indicating an error permission range for the control designation value.

A fortieth technical means of the present invention is a data receiving method for receiving video data and/or sound data, and receiving audio-visual environment control data for one or more peripheral device in an audio-visual environment space where the video data and/or the sound data is reproduced based on a user request, wherein the audio-visual environment control data includes a control designation value for the peripheral device, and producer preference information indicating an error permission range for the control designation value.

A forty-first technical means of the present invention is an audio-visual environment controlling method for receiving multiplexed data including video data and/or sound data, and audio-visual environment control data for one or more peripheral device in an audio-visual environment space where the video data and/or the sound data is reproduced, wherein the audio-visual environment control data includes a control designation value for the peripheral device, and producer preference information indicating an error permission range for the control designation value.

A forty-second technical means of the present invention is an audio-visual environment controlling method for receiving multiplexed data including video data and/or sound data, and identification information for identifying audio-visual environment control data for one or more peripheral device in an audio-visual environment space where the video data and/or the sound data is reproduced, and receiving the audio-visual environment control data based on the identification information, wherein the audio-visual environment control data includes a control designation value for the peripheral device, and producer preference information indicating an error permission range for the control designation value.

A forty-third technical means of the present invention is an audio-visual environment controlling method for receiving video data and/or sound data, and receiving audio-visual environment control data for one or more peripheral device in an audio-visual environment space where the video data and/or the sound data is reproduced based on a user request, wherein the audio-visual environment control data includes a control designation value for the peripheral device, and producer preference information indicating an error permission range for the control designation value.

A forty-fourth technical means of the present invention is a data receiving apparatus, comprising: receiving means for receiving multiplexed data including video data and/or sound data, and audio-visual environment control data for one or more peripheral device in an audio-visual environment space where the video data and/or the sound data is reproduced; and acquiring means for acquiring user preference data for restricting operations of the peripheral device based on the audio-visual environment control data, wherein the audio-visual environment control data includes at least a control designation value for the peripheral device, and the user preference data includes availability of operation information for the peripheral device and/or restriction information for the control designation value.

A forty-fifth technical means of the present invention is a data receiving apparatus, comprising: receiving means for receiving multiplexed data including video data and/or sound data, and identification information for identifying audio-visual environment control data for one or more peripheral device in an audio-visual environment space where the video data and/or the sound data is reproduced, and receiving the audio-visual environment control data based on the identification information; and acquiring means for acquiring user preference data for restricting operations of the peripheral device based on the audio-visual environment control data, wherein the audio-visual environment control data includes at least a control designation value for the peripheral device, and the user preference data includes availability of operation information for the peripheral device and/or restriction information for the control designation value.

A forty-sixth technical means of the present invention is a data receiving apparatus, comprising: receiving means for receiving video data and/or sound data, and receiving audio-visual environment control data for one or more peripheral device in an audio-visual environment space where the video data and/or the sound data is reproduced based on a user request; and acquiring means for acquiring user preference data for restricting operations of the peripheral device based on the audio-visual environment control data, wherein the audio-visual environment control data includes at least a control designation value for the peripheral device, and the user preference data includes availability of operation information for the peripheral device and/or restriction information for the control designation value.

A forty-seventh technical means of the present invention is the data receiving apparatus as defined in any one of forty-fourth to forty-sixth technical means, wherein the user preference data includes audio-visual environment information describing conditions for applying the user preference data.

A forty-eighth technical means of the present invention is the data receiving apparatus as defined in forty-seventh technical means, wherein the audio-visual environment information includes information of a time and/or a place to which with the user preference is applied.

A forty-ninth technical means of the present invention is a data receiving method, comprising: receiving multiplexed data including video data and/or sound data, and audio-visual environment control data for one or more peripheral device in an audio-visual environment space where the video data and/or the sound data is reproduced; and acquiring user preference data for restricting operations of the peripheral device based on the audio-visual environment control data, wherein the audio-visual environment control data includes at least a control designation value for the peripheral device, and the user preference data includes availability of operation information for the peripheral device and/or restriction information for the control designation value.

A fiftieth technical means of the present invention is a data receiving method, comprising: receiving multiplexed data including video data and/or sound data, and identification information for identifying audio-visual environment control data for one or more peripheral device in an audio-visual environment space where the video data and/or the sound data is reproduced, and receiving the audio-visual environment control data based on the identification information; and acquiring user preference data for restricting operations of the peripheral device based on the audio-visual environment control data, wherein the audio-visual environment control data includes at least a control designation value for the peripheral device, and the user preference data includes availability of operation information for the peripheral device and/or restriction information for the control designation value.

A fifty-first technical means of the present invention is a data receiving method, comprising: receiving video data and/or sound data, and receiving audio-visual environment control data for one or more peripheral device in an audio-visual environment space where the video data and/or the sound data is reproduced based on a user request; and acquiring user preference data for restricting operations of the peripheral device based on the audio-visual environment control data, wherein the audio-visual environment control data includes at least a control designation value for the peripheral device, and the user preference data includes operation availability information for the peripheral device and/or restriction information for the control designation value.

EFFECTS OF THE INVENTION

According to the present invention, it is possible to appropriately control a peripheral device in a content audio-visual environment in accordance with an intention of the content producer or the content provider, and to realize viewing/listening of the content with a highly realistic sensation by describing preference of a content producer or a content provider as audio-visual environment control data corresponding to an audio-visual content. Moreover, a user (viewer) is able to realize audio-visual environment control suited to the audio-visual situation by setting execution conditions for an audio-visual environment control depending on a user preference and an audio-visual situation.

BRIEF DESCRIPTION OF DRAWINGS

[Fig. 1] Fig. 1 is a functional block diagram illustrating a schematic configuration of a data transmitting apparatus according to an embodiment of the present invention.

[Fig. 2] Fig. 2 is a view illustrating a schematic configuration in which the data transmitting apparatus of Fig. 1 transmits audio-visual environment control data through a network that is different from a network where video/sound multiplexed data is transmitted.

[Fig. 3] Fig. 3 is a functional block diagram illustrating an internal configuration of an audio-visual environment control data input portion.

[Fig. 4] Fig. 4 is a view illustrating an example of descriptive contents in an effect input portion.

[Fig. 5] Fig. 5 is a view illustrating an example of descriptive contents of producer preference in a preference input portion.

[Fig. 6] Fig. 6 is a view illustrating exemplary XML description of audio-visual environment control data in an embodiment 1.

[Fig. 7] Fig. 7 shows exemplary XML schema description of an audio-visual environment control data format in the embodiment 1.

[Fig. 8] Fig. 8 is a functional block diagram illustrating a schematic configuration of a data receiving apparatus according to an embodiment of the present invention.

[Fig. 9] Fig. 9 is a view illustrating a schematic configuration when audio-visual environment control data is received from a network different from that of video/sound multiplexed data in the data receiving apparatus illustrated in Fig. 8.

[Fig. 10] Fig. 10 is a functional block diagram illustrating an internal configuration of a device control portion.

[Fig. 11] Fig. 11 is a flowchart for explaining operations of the device control portion.

[Fig. 12] Fig. 12 is a view for explaining an example where producer preference is applied in an embodiment of the present invention.

[Fig. 13] Fig. 13 shows exemplary XML description of audio-visual environment control data in another embodiment of the present invention.

[Fig. 14] Fig. 14 shows exemplary XML schema description of an audio-visual environment control data format in another embodiment of the present invention.

[Fig. 15] Fig. 15 is a view illustrating an operation flow of the device control portion in another embodiment of the present invention.

[Fig. 16] Fig. 16 shows exemplary XML description of audio-visual environment control data in yet another embodiment of the present invention.

[Fig. 17] Fig. 17 shows exemplary XML schema description of an audio-visual environment control data format in yet another embodiment of the present invention.

[Fig. 18] Fig. 18 is a view illustrating an example of quantization of color temperature values.

[Fig. 19] Fig. 19 is a view illustrating an example of quantization of wind speed values.

[Fig. 20] Fig. 20 is a view illustrating exemplary data of user preference describing an execution method for each additional effect.

[Fig. 21] Fig. 21 is a functional block diagram illustrating a modified example of the data receiving apparatus.

[Fig. 22] Fig. 22 is a functional block diagram illustrating a modified example of an internal configuration of the device control portion.

[Fig. 23] Fig. 23 is a flowchart illustrating operations of the device control portion in yet another embodiment of the preset invention.

[Fig. 24] Fig. 24 is a view for explaining an example where user preference is applied.

[Fig. 25] Fig. 25 is a view illustrating exemplary data describing information of an audio-visual environment in user preference.

[Fig. 26] Fig. 26 is a view illustrating exemplary description of user preference with the use of audio-visual environment information and control information of additional effects.

[Fig. 27] Fig. 27 shows exemplary XML description of user preference in yet another embodiment of the present invention.

[Fig. 28] Fig. 28 shows exemplary XML schema description of a user preference format in yet another embodiment of the present invention.

[Fig. 29] Fig. 29 is a view illustrating exemplary description of filtering of additional effects.

PREFERRED EMBODIMENTS OF THE INVENTION

Embodiments of the present invention will hereinafter be described in detail with reference to drawings.

(Embodiment 1)

(Data transmitting apparatus)

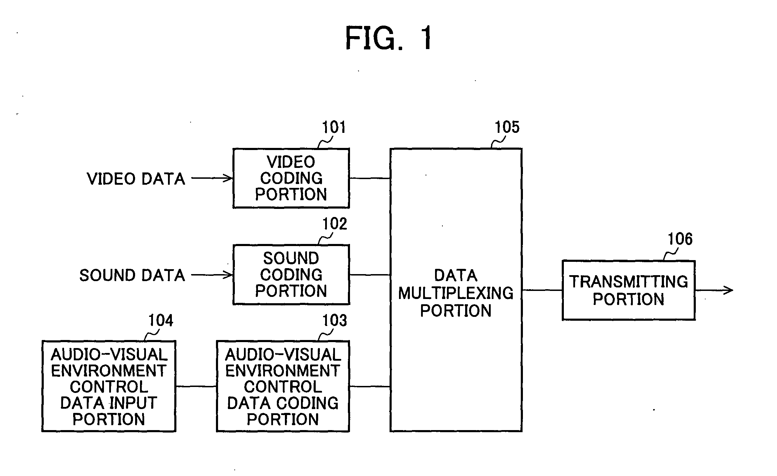

First, a data transmitting apparatus will be described. Fig. 1 is a functional block diagram illustrating a schematic configuration of the data transmitting apparatus according to an embodiment of the present invention.

The data transmitting apparatus is comprised of a video coding portion 101, a sound coding portion 102, an audio-visual environment control data coding portion 103, an audio-visual environment control data input portion 104, a data multiplexing portion 105, and a transmitting portion 106.

Input video data is compressed and coded by the video coding portion 101 and output to the data multiplexing portion 105. Various compression methods are usable for the video coding, including ISO/IEC 13818-2 (MPEG-2 Video), ISO/IEC 14496-2 (MPEG-4 Visual), ISO/IEC 14496-10 (MPEG-4 AVC), and the like.

Similarly, input sound data is compressed and coded by the sound coding portion 102 and output to the data multiplexing portion 105. Various compression methods are usable for the sound coding, including ISO/IEC 13818-7 (MPEG-2 AAC), ISO/IEC 14496-3 (MPEG-4 Audio), and the like.

Moreover, audio-visual environment control data input by the audio-visual environment control data input portion 104 is compressed and coded by the audio-visual environment control data coding portion 103 and output to the data multiplexing portion 105. Note that, the audio-visual environment control data will be described below in detail. For example, the XML (Extensible Markup Language) format and the like are used as a description method of the audio-visual environment control data. In addition, for a compression method of the audio-visual environment control data, the BiM (Binary format for MPEG-7) format in ISO/IEC 15938-1 (MPEG-7 Systems) and the like are usable. Alternatively, the output may be carried out in the very XML format without performing compression.

The video data, the sound data, and the audio-visual environment control data that have been coded are multiplexed by the data multiplexing portion 105 and sent or accumulated through the transmitting portion 106. For example, an MPEG-2 transport stream packet (TSP), an IP packet, an RTP packet, and the like in ISO/IEC 13818-1 (MPEG-2 Systems) are usable as a multiplexing method.

For example, when the transport stream packet (TSP) prescribed in the MPEG-2 is used, it is possible that, subsequent to a header in which information prescribed in the MPEG-2 is described, audio-visual environment control data is described in an extended header portion, and further video data and sound data are sent by a payload subsequent to the extended header. Alternatively, audio-visual environment control data may be sent by a payload, as well as video data and sound data are sent. Moreover, video data, sound data, and audio-visual environment control data may be sent by multiplexing different data streams of respective data.

Although it is configured such that video, sound, and audio-visual environment control data are multiplexed and transmitted in the above, it may be configured such that video/sound multiplexed data and audio-visual environment control data are transmitted through different networks. For example, there is a case where video/sound multiplexed data is transmitted as broadcasting data and audio-visual environment control data is transmitted to the Internet.

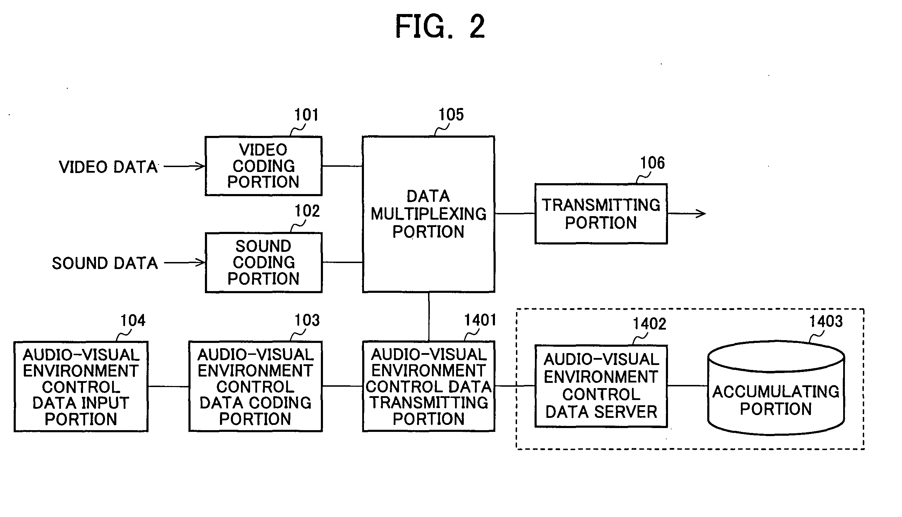

Fig. 2 is a view illustrating a schematic configuration in which the data transmitting apparatus of Fig. 1 transmits audio-visual environment control data through a network that is different from a network where video/sound multiplexed data is transmitted. In Fig. 2, the same reference numerals are provided to the blocks having the same functions as Fig. 1. Audio-visual environment control data coded by the audio-visual environment control data coding portion 103 is accumulated in an accumulating portion 1403 from an audio-visual environment control data transmitting portion 1401 through an audio-visual environment control data server 1402. Note that, the audio-visual environment control data transmitting portion 1401 notifies the data multiplexing portion 105 of a URL (Uniform Resource Locator) for identifying the audio-visual environment control data and transmits the URL together with video/sound data by multiplexing them, so that a data receiving apparatus side is allowed to acquire the audio-visual environment control data from the audio-visual environment control data server 1402 based on the URL as identification information, thus making it possible to link the video/sound multiplexed data and the audio-visual environment control data. The transmission of the audio-visual environment control data may be carried out at the same time as the transmission of the video/sound multiplexed data or may be carried out upon reception of a request from outside (user, etc.).

Note that, when the audio-visual environment control data is transmitted through a network that is different from a network where the video/sound multiplexed data is transmitted and may be any identification information which can specify a corresponding relation between the video/sound multiplexed data and the audio-visual environment control data, including a CRID (Content Reference ID) in the TV-Anytime specification, a content name, and the like, not limited to the URL described above, may be used as the identification information for associating the audio-visual environment control data with the video/sound multiplexed data.

Alternatively, only the audio-visual environment control data may be recorded in another recording medium for distribution. For example, there is a case where the video/sound data is distributed by a large capacity recording medium such as a Blu-ray Disc and a DVD, and the audio-visual environment control data is distributed by a small-sized semiconductor recording medium or the like. In this case, when a plurality of contents are recorded for distribution, identification information which can specify a corresponding relation between the video/sound data and the audio-visual environment control data is also necessary.

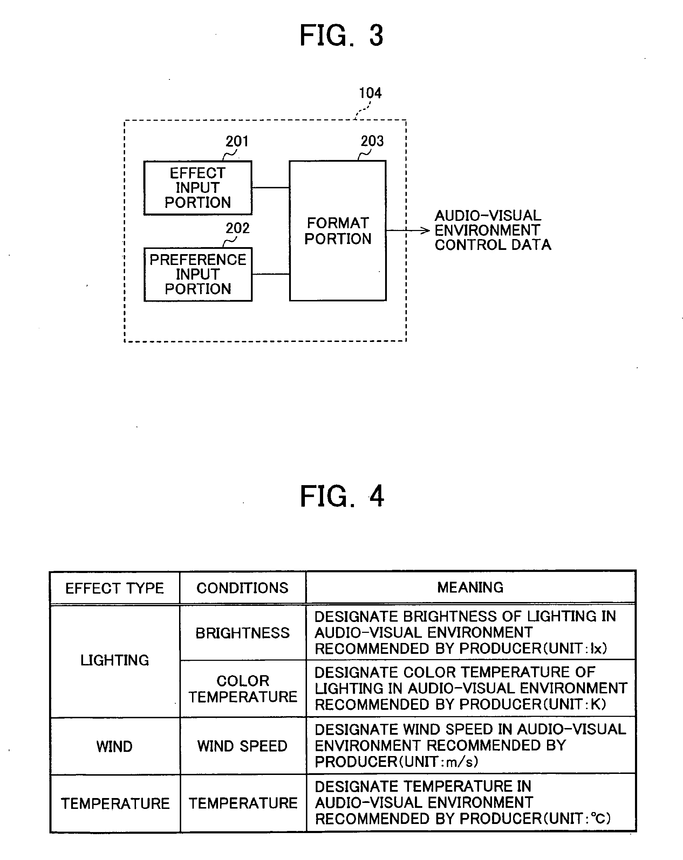

Next, the audio-visual environment control data input portion 104 will be described. Fig. 3 is a functional block diagram illustrating an internal configuration of the audio-visual environment control data input portion 104. The audio-visual environment control data input portion 104 is comprised of an effect input portion 201, a preference input portion 202, and a format portion 203.

Fig. 4 is a view illustrating an example of descriptive contents in the effect input portion, and effect types to be added to a content and conditions (values indicating effects) are input by the effect input portion 201.

For example, in the case of a lighting effect, as shown in Fig. 4, brightness (unit: 1x) of the lighting and a color temperature (unit: K) of the lighting, etc. in an audio-visual environment recommended by a content producer or a content provider are designated as lighting conditions. Note that, to represent the brightness, not lux (lx) but candela (Cd), lumen (lm), and the like may be used. Moreover, to represent the color, not a color temperature but an XYZ color system, an RGB color system, a YCbCr color system, and the like may be used.

Here, the video data enables to produce an atmosphere and a realistic sensation for each scene with illumination light and serves as information in which lighting conditions for a lighting device are useful.

For example, controlling audio-visual environment lighting enables to improve a realistic sensation for each scene of contemporary/samurai dramas. That is, the color temperatures of lighting of the lighting devices generally used in contemporary dramas are about 5000 K for fluorescent lamps (daylight white color), about 6700 K for fluorescent lamps (daylight color), and about 2800 K for incandescent lamps. On the other hand, the color temperature is about 1800 to 2500 K in the case of candle light that is frequently used for light sources at night in samurai dramas. Moreover, the light intensity tends to be high in contemporary dramas and low in samurai dramas.

Therefore, when an indoor scene in the twilight is projected in a samurai drama, a realistic sensation is not obtained by viewing/listening under an environment where the color temperature of the lighting is high and the light intensity is high, and such environment results to give viewing/listening under an audio-visual environment against an intention of a content producer or a content provider.

Accordingly, it is desirable that the content producer or the content provider designates conditions for various peripheral devices in order to appropriately control peripheral devices in a content audio-visual environment in accordance with the intention of the producer at the time of viewing/listening video data and sound data, and the content producer or the content provider is able to make the conditions by actually viewing/listening the video data and the sound data and designating, for example, lighting conditions (brightness, color temperatures) for each scene. Alternatively, it is possible that average luminance and a dominant color in an entire screen or around the screen are automatically extracted by analyzing video data or video coded data, and lighting conditions such as brightness and color temperatures of the lighting are determined based on the extracted luminance information and color information. In addition, at this time, producer preference, which will be described below, may be designated together.

Note that, effect types illustrated in Fig. 4 are lighting, wind, and temperatures, but may be any, including vibration and scent, as far as providing a certain realistic sensation to an audio-visual space linked to operate with reproduction of a content.

Moreover, it is possible to add the audio-visual environment control data per frame, per shot, or per scene of the video data. At the least, the audio-visual environment control data may be added per scene, however, it is possible to control the audio-visual environment more precisely when the audio-visual environment control data is added per frame. For example, the audio-visual environment control data may be added only to a specific frame (such as a scene switching frame) in accordance with an intention of a video producer (such as a scenario writer or a director).

Moreover, adding the audio-visual environment control data per shot enables to realize appropriate control over audio-visual environment lighting, for example, even in a case where outdoor and indoor shots are included in the same scene. In addition, it may be configured such that the audio-visual environment control data is added per GOP (Group of Picture) that is a unit of random access to video data and the like.

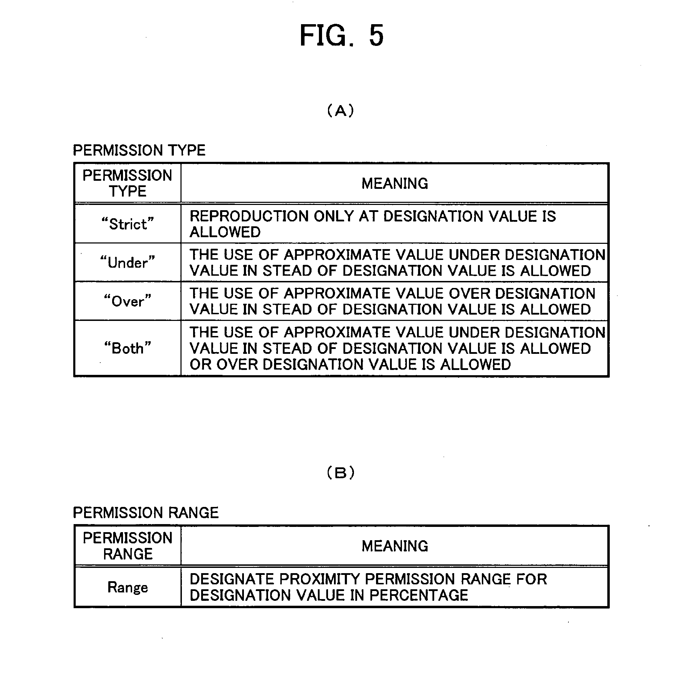

At the preference input portion 202, whether to recommend strict reproduction of lighting conditions (such as brightness and color temperature values) and the like designated by the effect input portion 201 or to allow a permission range indicated by a predetermined threshold is input as preference (fondness) of a content producer or a content provider. As examples of descriptive contents of preference, as shown in Fig. 5 (A), for example, four kinds of permission types including "Strict" which allows reproduction of a designation value only, "Under" which allows the use of an approximate value under the designation value in stead of the designation value, "Over" which allows the use of an approximate value over the designation value in stead of the designation value, and "Both" which allows the use of an approximate value under the designation value or over the designation value in stead of the designation value, and a permission range in which a proximity permission range for the designation value is represented in percentage shown in Fig. 5(B) are cited.

Note that, contents (values) input by the preference input portion 202 are referred to as producer preference or producer preference information. Thus, the audio-visual environment control data includes an effect type added to a content, conditions thereof (which are values indicating effects and serve as control designation values), and producer preference.

At the format portion 203, contents input by the effect input portion 201 and the preference input portion 202 are output according to a predetermined format.

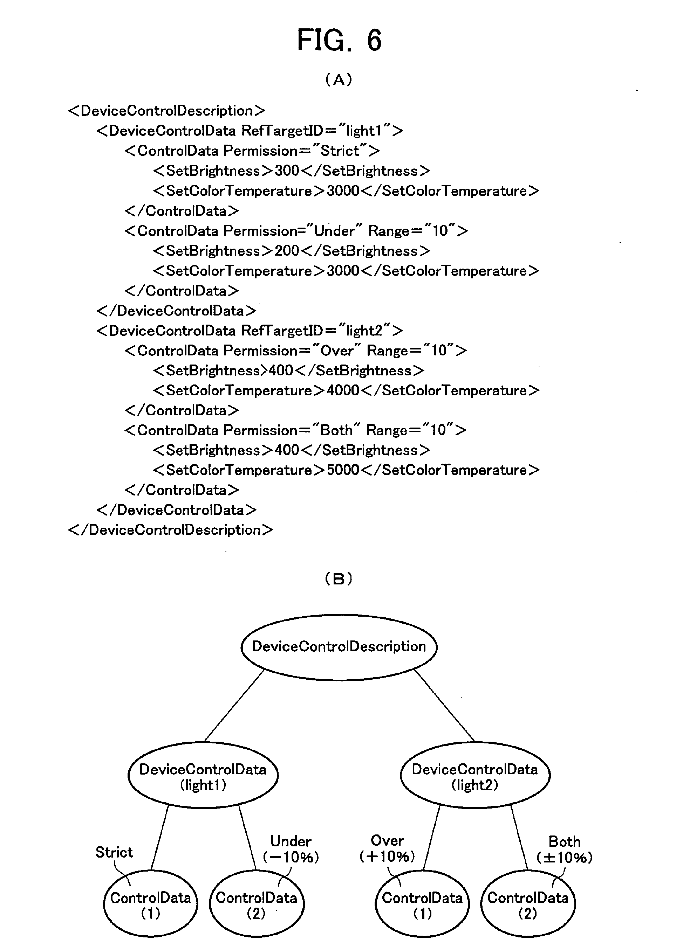

Fig. 6 (A) shows an example when audio-visual environment control data for lighting effects including producer preference is described in XML and Fig. 6(B) is a view where the XML description of Fig. 6 (A) is schematically shown in a tree structure.

In Fig. 6, there are two lighting control data (Device Control Data: light 1 and light 2) as device control data (Device Control Description) for an entire content, each of which describes two control data (Control Data (1) and Control Data (2)). Here, the Control Data (1) and the Control Data (2) are control data arranged in chronological order, and time information which is not shown is added to each of the Control Data.

In each of the Control Data, brightness and a color temperature of the lighting, and producer preference are described. For example, in the Control Data (2) of light 1, the brightness is 200 (lx) and the color temperature is 3000 (K), and as producer preference, the permission range of -10 %, that is, the permission range with the brightness of 180 to 200 (lx) and the color temperature of 2700 to 3000 (K) is allowed.

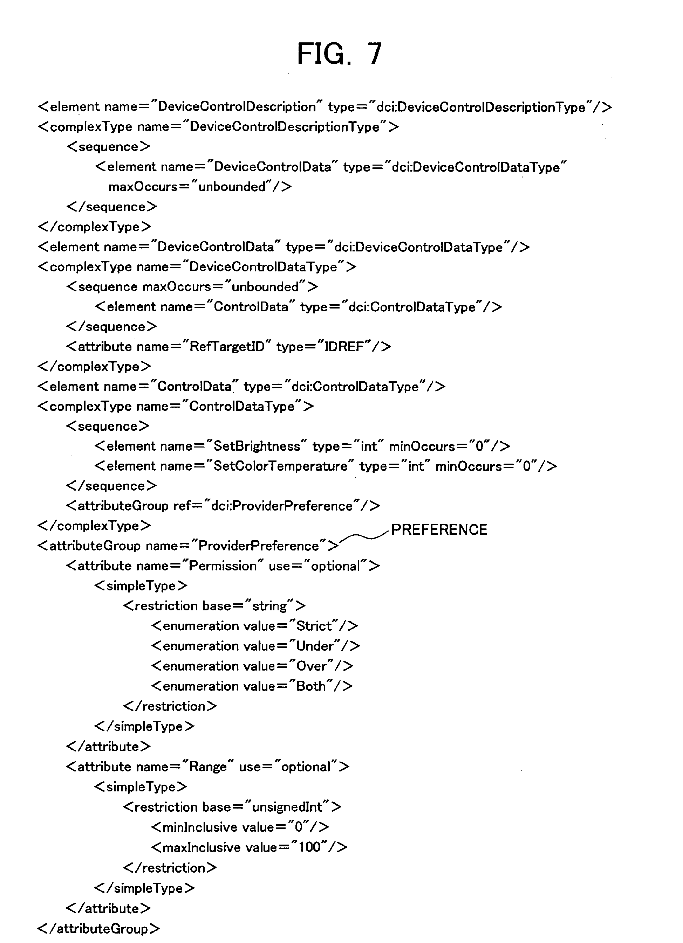

Fig. 7 is a view illustrating XML schema corresponding to the XML description of Fig. 6. Here, producer preference (Provider Preference) is defined as an attribute of a Control Data element (element), but not necessarily limited thereto, may be defined as, for example, a child element (child element) for the Control Data element.

In this manner, it is possible to carry out control in accordance with an intention of the producer and provide content viewing/listening with a realistic sensation even in a case where the specification of a peripheral device in an audio-visual environment (support ranges of brightness and a color temperature in the case of a lighting device) by adding effects added to a content, such as lighting, wind, and temperatures, and preference of a content producer or a content provider with respect to the effects, to audio-visual environment control data.

(Data receiving apparatus)

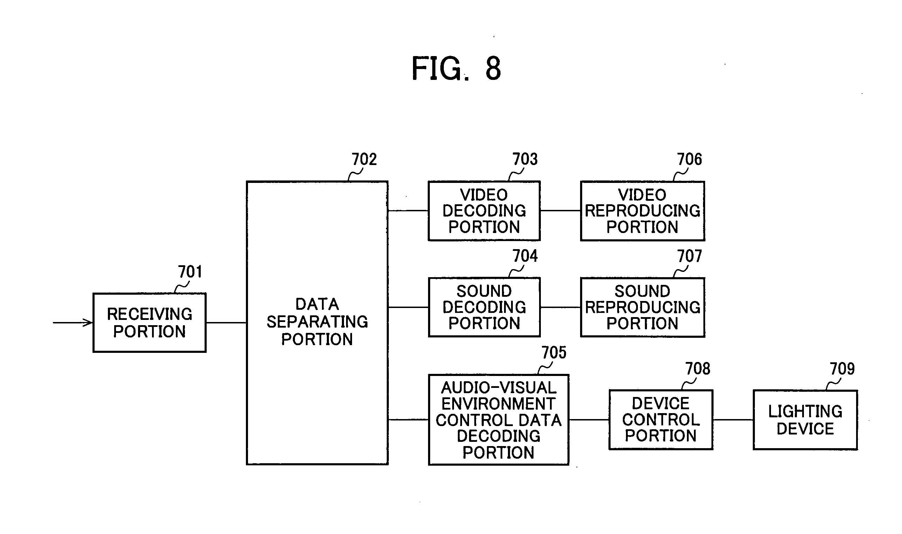

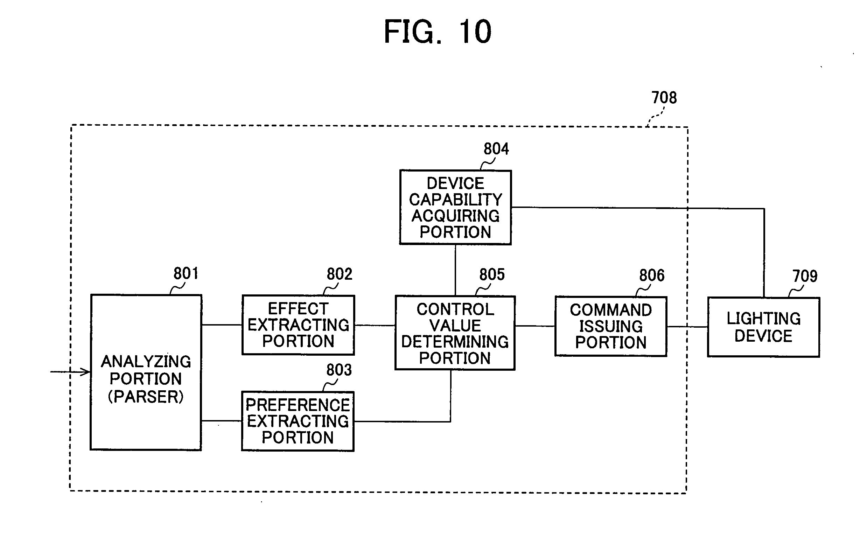

Next, a data receiving apparatus will be described. Fig. 8 is a functional block diagram illustrating a schematic configuration of the data receiving apparatus according to an embodiment of the present invention.
The data receiving apparatus is comprised of a receiving portion 701, a data separating portion 702, a video decoding portion 703, a sound decoding portion 704, an audio-visual environment control data decoding portion 705, a video reproducing portion 706, a sound reproducing portion 707, a device control portion 708, and a lighting device 709 as an example of devices to be controlled.
Multiplexed data (for example, an MPEG-2 transport stream) including video, sound, and audio-visual environment control data received by the receiving portion 701 is separated by the data separating portion 702 into video coded data, sound coded data, and audio-visual environment control data, and each of which is output to the video decoding portion 703, the sound decoding portion 704, and the audio-visual environment control data decoding portion 705.
The video coded data is decoded by the video decoding portion 703 and reproduced by the video reproducing portion 706. The sound coded data is decoded by the sound decoding portion 704 and reproduced by the sound reproducing portion 707. In addition, the audio-visual environment control data is decoded by the audio-visual environment control data decoding portion 705 and output to the device control portion 708.
The device control portion 708 controls the lighting device 709 according to descriptive contents of the audio-visual environment control data that has been input. Note that, although only the lighting device 709 is described as a device to be controlled by the device control portion 708 in the present embodiment, a fan, an air conditioner, a vibration device, a scent generating device, and the like may also be objects to be controlled.
Although it is configured such that data in which the video, sound and audio-visual environment control data are multiplexed is received in the above, it may be configured such that the video/sound multiplexed data and the audio-visual environment control data are received from separate networks. For example, there is a case where the video/sound multiplexed data is received from broadcasting data and the audio-visual environment control data is received from the Internet.

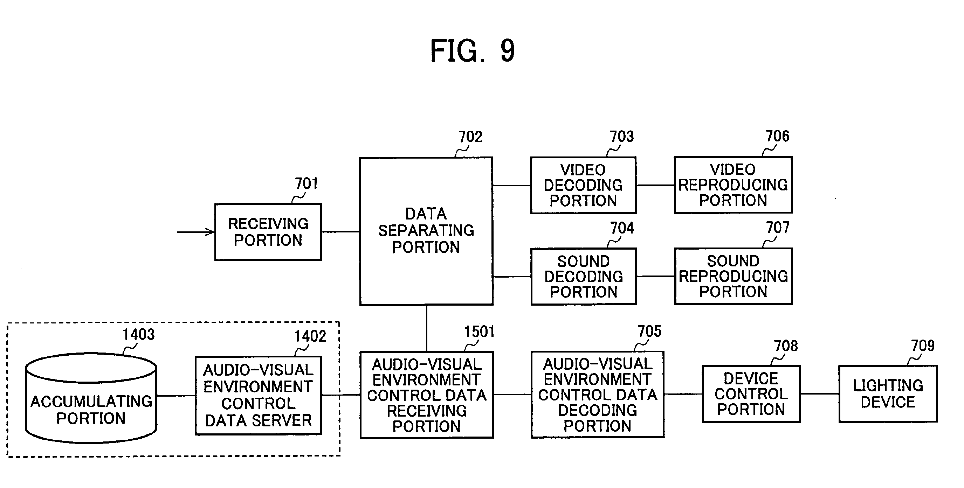

Fig. 9 is a view illustrating a schematic configuration in which the data receiving apparatus illustrated in Fig. 8 receives audio-visual environment control data from a network that is different from a network where video/sound multiplexed data is received. The same reference numerals are provided to the blocks having the same functions as the data receiving apparatus illustrated in Fig. 8 and the data transmitting apparatus illustrated in Fig. 2.
Note that, the data receiving apparatus illustrated in Fig. 9 is a counterpart to the data transmitting apparatus illustrated in Fig. 2.
An audio-visual environment control data receiving portion 1501 receives audio-visual environment control data accumulated in an accumulating portion 1403 through an audio-visual environment control data server 1402 to output to the audio-visual environment control data decoding portion 705. Note that, the audio-visual environment control data receiving portion 1501 acquires from the data separating portion 702, for example, a URL (Uniform Resource Locator) for identifying the audio-visual environment control data that has been multiplexed with the video/sound data as described above, and based on the URL, acquires the audio-visual environment control data from the audio-visual environment control data server 1402, and thereby, enables to link the video/sound multiplexed data and the audio-visual environment control data. The reception of audio-visual environment control data may be carried out at the timing when the URL for identifying the audio-visual environment control data is acquired from the data separating portion 702 or may be carried out based on a user request.
Note that, the identification information for associating the audio-visual environment control data with the video/sound multiplexed data is not limited to the above-described URL as described before.
Moreover, only the audio-visual environment control data may be acquired from another recording medium. For example, there is a case where the video/sound data is acquired from a large capacity recording medium such as a Blu-ray Disc and a DVD and the audio-visual environment control data is acquired from a small-sized semiconductor recording medium such as a compact flash (registered trademark) and an SD card.
Next, the device control portion 708 will be described. Fig. 10 is a functional block diagram illustrating an internal configuration of the device control portion 708, where the lighting device 709 is also illustrated for the convenience of description.
The device control portion 708 is comprised of an analyzing portion (parser) 801, an effect extracting portion 802, a preference extracting portion 803, a device capability acquiring portion 804, a control value determining portion 805, and a command issuing portion 806.
Audio-visual environment control data output by the audio-visual environment control data decoding portion 705 for controlling the lighting (Fig. 6) is parsed by the analyzing portion 801, and information indicating lighting conditions such as brightness and color temperatures of the lighting is output to the effect extracting portion 802 and information indicating preference is output to the preference extracting portion 803.

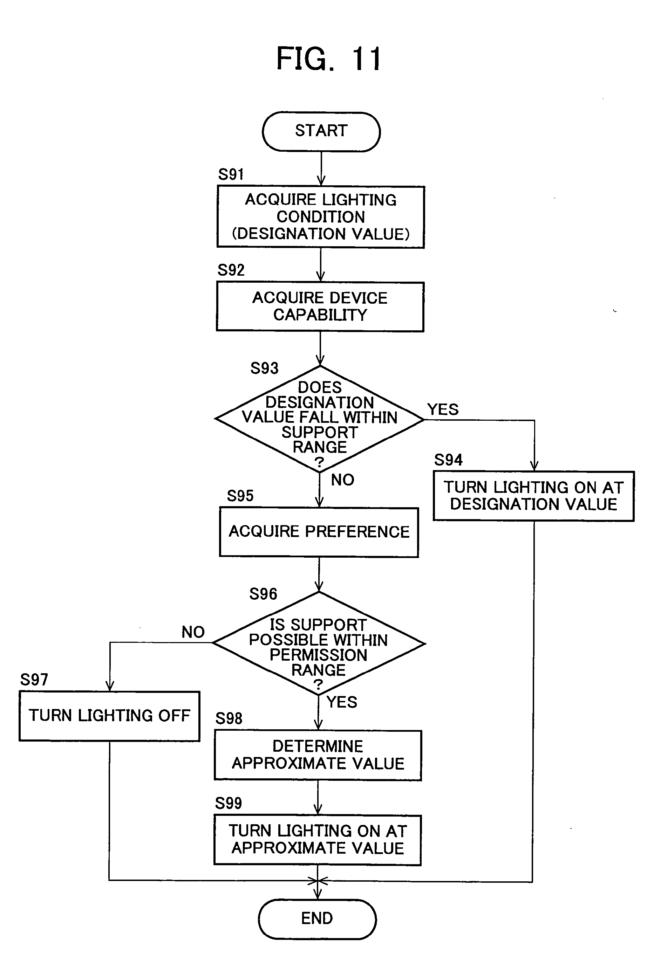

Fig. 11 is a flowchart for explaining operations of the device control portion 708, and description will be given below based on the processing content of each step.

First, the analyzing portion 801 parses audio-visual environment control data output by the audio-visual environment control data decoding portion 705, and the effect extracting portion 802 acquires a designation value (such as brightness and a color temperature) of lighting conditions from the audio-visual environment control data (step S91). On the other hand, the device capability acquiring portion 804 acquires a value of device capability (support range) of the lighting device 709 (step S92).

Subsequently, the control value determining portion 805 compares the designation value of the lighting conditions with the support range of the lighting device (step S93). When the designation value falls within the support range, the flow goes to step S94, and the command issuing portion 806 issues a command for turning the lights on with the brightness and the color temperature designated by the designation value and finishes the processing.

When the designation value falls out of the support range at step S93, the flow goes to step S95, and the preference extracting portion 803 acquires producer preference (permission type and permission range) out of the audio-visual environment control data parsed by the analyzing portion 801. The flow then goes to step S96, and the control value determining portion 805 compares the permission range of lighting conditions led by preference and the support range of the lighting device acquired at step S92. When support is allowed within the permission range, then the flow goes to step S98, and the control value determining portion 805 determines an approximate value closest to the designation value within the support range of the lighting device and informs the command issuing portion 806 of the approximate value. The command issuing portion 806 issues a command for turning the lighting on with the approximate value to the lighting device 709 (step S99).

Alternatively, when support is not allowed even in the permission range led by preference at step S96, the flow goes to step S97, and the command issuing portion 806 does not issue a command for the lighting to the lighting device (step S97) and processing is finished with the lighting turned off.

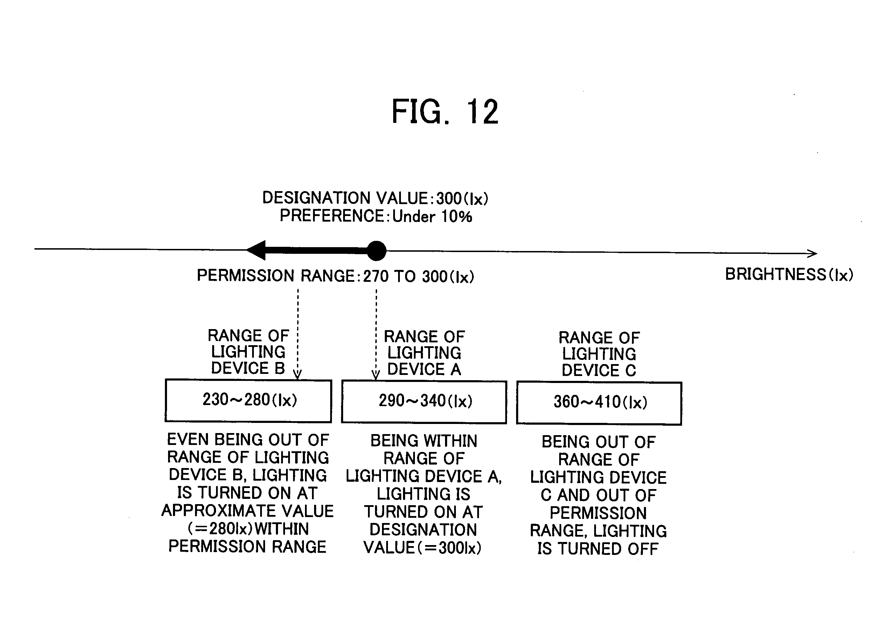

Here, description will be given with reference to Fig. 12 for an example where producer preference is applied in a case where each user has three types of lighting devices A, B, and C having different specifications.

The designation values of lighting conditions by a content producer are such that brightness is 300 (lx) and preference is "Under" 10 %, that is, the permission range is 270 to 300 (lx).

The lighting device A has the brightness support range of 290 to 340 (lx), so that the lighting is allowed to be turned on at the designation value of 300 (lx).

Moreover, the lighting device B has the brightness support range of 230 to 280 (1x), where the designation value of 300 (lx) is not supported, but a part (270 to 280 (lx)) within the permission range (270 to 300 (lx)) led by preference is supported, so that the lighting is allowed to be turned on, for example, at 280 (lx) closest to the designation value.

In addition, the lighting device C has the support range of 360 to 410 (lx), where the designation value of 300 (lx) is not supported. Further, support is not made even within the permission range led by preference, so that the lighting is turned off.

The lighting device 709 connected to the data receiving apparatus is able to be configured by LEDs that emit lights of three primary colors, for example, RGB with predetermined hues. However, the lighting device 709 may have any configuration capable of controlling colors and brightness of the lighting in a surrounding environment of a video display device, is not limited to the combination of LEDs emitting light of predetermined colors as described above, and may be configured by white LEDs and color filters, or a combination of white bulbs or fluorescent tubes, or may be applied with a combination of white lamps or fluorescent tubes and color filters, color lamps, etc. may also be applied. Moreover, one or more of the lighting devices 70 may be arranged.

In addition, the command issuing portion 806 may be anything that is capable of generating RGB data corresponding to the designation values (such as brightness and a color temperature) of lighting conditions from the control value determining portion 805 to output to the lighting device 709.

In this manner, when the lighting device does not satisfy designated lighting conditions, it is possible to carry out appropriate control in accordance with an intention of a producer by controlling ON/OFF of the lighting at an approximate value corresponding to preference.

(Embodiment 2)

(Data transmitting apparatus)

The schematic configuration of the data transmitting apparatus in the present embodiment is similar to Fig. 1, Fig. 2, and Fig. 3 in the embodiment 1. In the present embodiment, operations of the audio-visual environment control data input portion 104 are different from the embodiment 1.

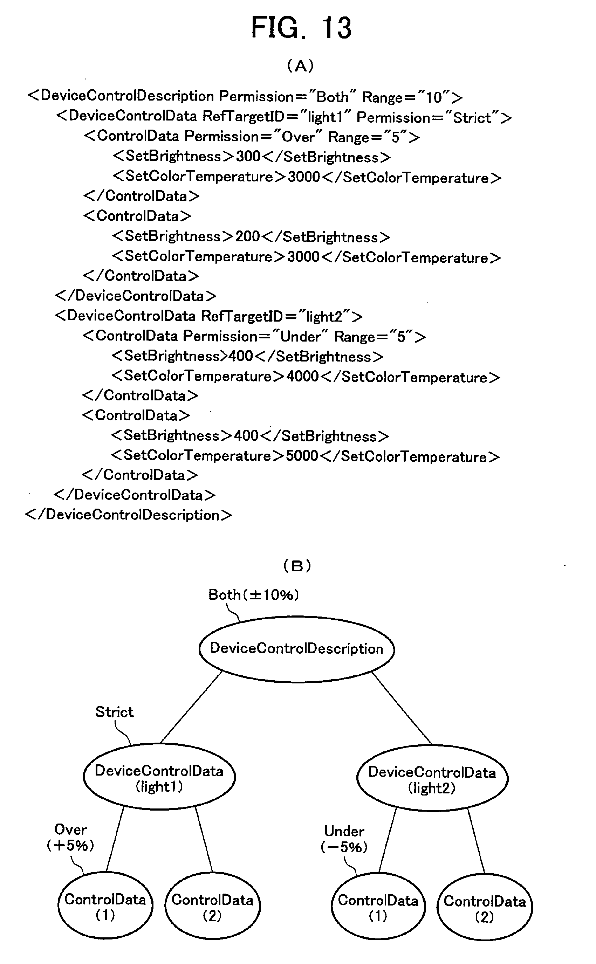

Fig. 13 (A) shows an example when audio-visual environment control data for lighting effects including producer preference is described in XML and Fig. 13(B) is a view where the XML description of Fig. 13(A) is schematically shown in a tree structure.

Different from the embodiment 1, the configuration of Fig. 13 is such that description of preference is allowed across a plurality of hierarchies, such as not only control data (Control Data) but also device control data (Device Control Description) of an entire content, and lighting control data (Device Control Data: light 1 and light 2). In addition, description of preference is not essential, and if description is not made, preference of an upper hierarchy (parent element) is referred to. Moreover, when there is no description even after referencing up to a highest hierarchy, preference that is determined as default in advance (for example, such as the permission type "Both" and the permission range 10 %) is used.

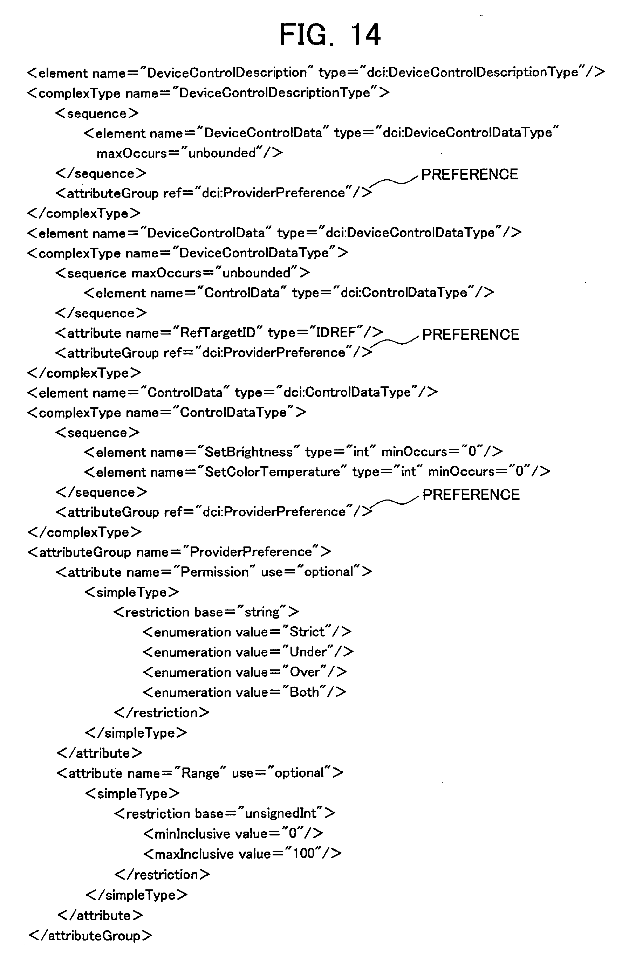

Fig. 14 is a view illustrating XML schema corresponding to the XML description shown in Fig. 13. Here, preference (Provider Preference) is defined as attributes of a Device Control Description element, a Device Control Data element, and a Control Data element, but not necessarily limited thereto, may be defined as a child element for each element, for example.

In this manner, it is possible to carry out control in accordance with an intention of the producer and provide content viewing/listening with a realistic sensation even in a case where the specification of a peripheral device in an audio-visual environment (a support range of brightness and a color temperature in the case of a lighting device) does not satisfy the designation condition by adding effects added to a content, such as lighting, wind, and temperatures, and preference of a content producer or a content provider with respect to the effects, to audio-visual environment control data. Further, adding producer preference to an upper element collectively or only to a necessary element enables to avoid a problem of increasing the data amount unnecessarily and a problem of increasing the burden on the side where producer preference is added.

(Data receiving apparatus)

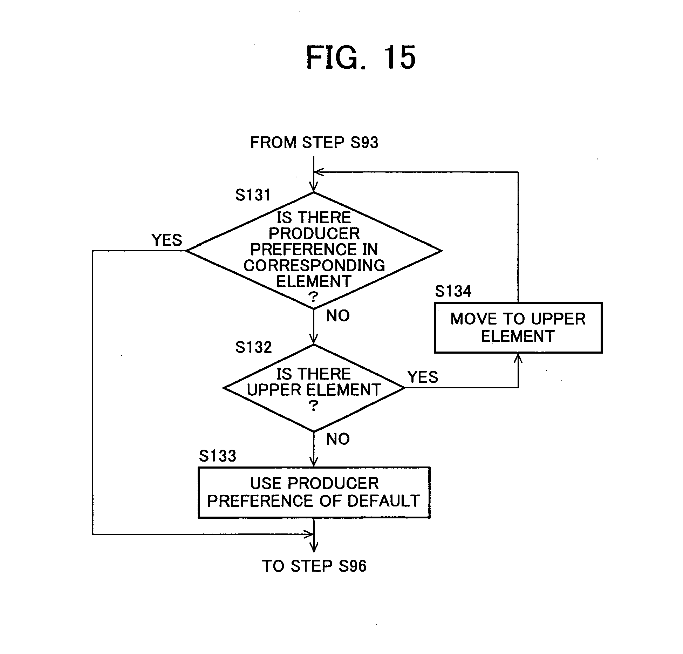

The schematic configuration of the data receiving apparatus in the embodiment 2 is similar to Fig. 8, Fig. 9, and Fig. 10. Operations of the device control portion 708 are different from the embodiment 1.
In the present embodiment, the operation for acquiring preference at step S95 in the flowchart illustrated in Fig. 11 is different from that in the embodiment 1, and the operation is as shown in Fig. 15.

When the designation value falls out of the support range at step S93 of Fig. 11, the flow goes to step S131 of Fig. 15, and it is judged by the analyzing portion 801 and the preference extracting portion 803 whether or not preference is described in the corresponding element. When preference is described, then the flow goes to step S96 of Fig. 11 and subsequent processing is performed.
Alternatively, when preference is not described in the corresponding element at step S131, it is judged by the analyzing portion 801 whether or not there is an upper (parent) element of the corresponding element (step S132), and in the case of YES, moving to the upper (parent) element (step S134), and the flow further goes to step S131.
Alternatively, when there is no upper element at step S132, the flow goes to step S133, and at the control value determining portion 805, preference that is determined in advance is used so that the flow goes to step S96 of Fig. 11 and subsequent processing is performed.

In the example shown in Fig .13, since the Control Data (1) of light 1 has the permission range of +5 % as preference, this preference is used, but since the Control Data (2) of light 1 does not have preference, "Strict" which allows reproduction of a designation value only, that is a preference of the Device Control Data (light 1) of an upper hierarchy thereof, is applied. In addition, since the Control Data (2) of light 2 does not have preference and the Device Control Data (light 2) of an upper hierarchy thereof does not have preference, preference of the Device Control Description of a further upper hierarchy (permission type "Both" and permission range 10 %) is applied.

In this manner, when the lighting device does not satisfy designated lighting conditions, it is possible to carry out appropriate control in accordance with an intention of a producer by controlling ON/OFF of the lights at an approximate value according to preference.

(Embodiment 3)

In the embodiments 1 and 2, an example of preference acting on a lighting control unit is illustrated, however, second preference acting on entire audio-visual environment control data may further be described. That is, a no-permission type flag selecting, when a control condition of certain lighting is not satisfied, whether all the control of the lighting in the content are not permitted (control of the lighting whose condition is satisfied is also not permitted) or only control of the lighting whose condition is not satisfied is not permitted (control of the lighting whose condition is satisfied is permitted), may be described.
Note that, the above-described no-permission type flag may be collectively transmitted/received together with each control data in the content, or may be transmitted/received prior to actual control data.

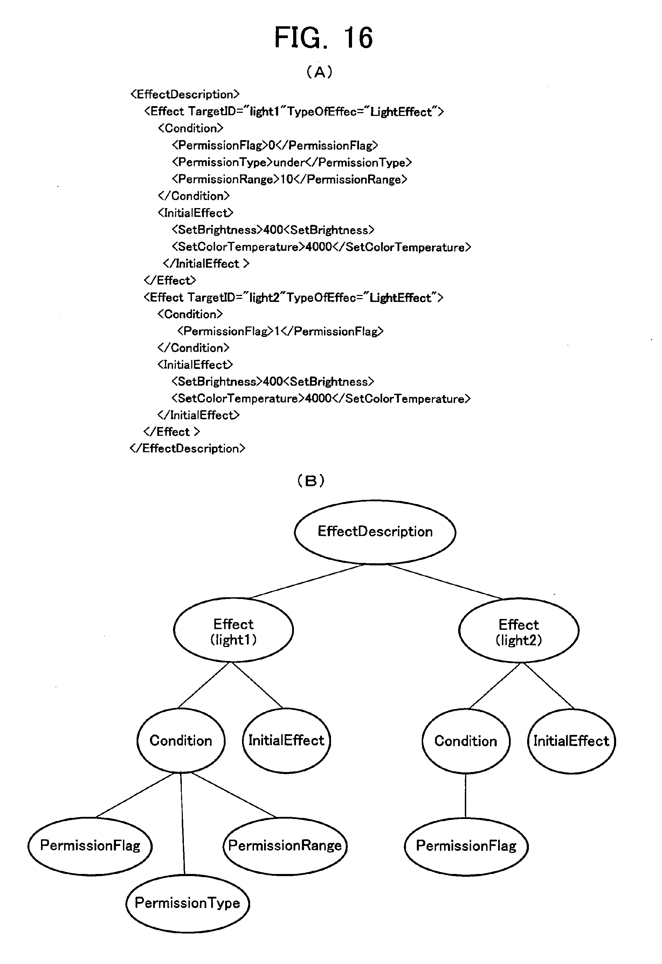

Fig. 16 (A) shows an example when audio-visual environment control data for lighting effects including the above-described no-permission type flag (Permission Flag) is described in XML. Fig. 16 (B) is a view schematically illustrating the XML description of Fig. 16 (A) in a tree structure. Permission Flag = "1" denotes the former (when a control condition of certain lighting is not satisfied, all the control of the lighting in the content are not permitted). That is, when there is even one control data which does not satisfy a condition among lighting control data relating to light 1, all the control of light 1 are not permitted. On the other hand, Permission Flag = "0" denotes the latter (only control of the lighting whose condition is not satisfied is not permitted). That is, even when there is control data which does not satisfy a condition among lighting control data relating to light 2, it is not that all the control of light 2 are not permitted but that only control of light 2 whose condition is not satisfied is not permitted. When Permission Flag = "0", Permission Type (equivalent to a Permission attribute in the example 1 or the example 2) and Permission Range (equivalent to a Range attribute in the example 1 or the example 2) may be described as preference of a producer at the same time.

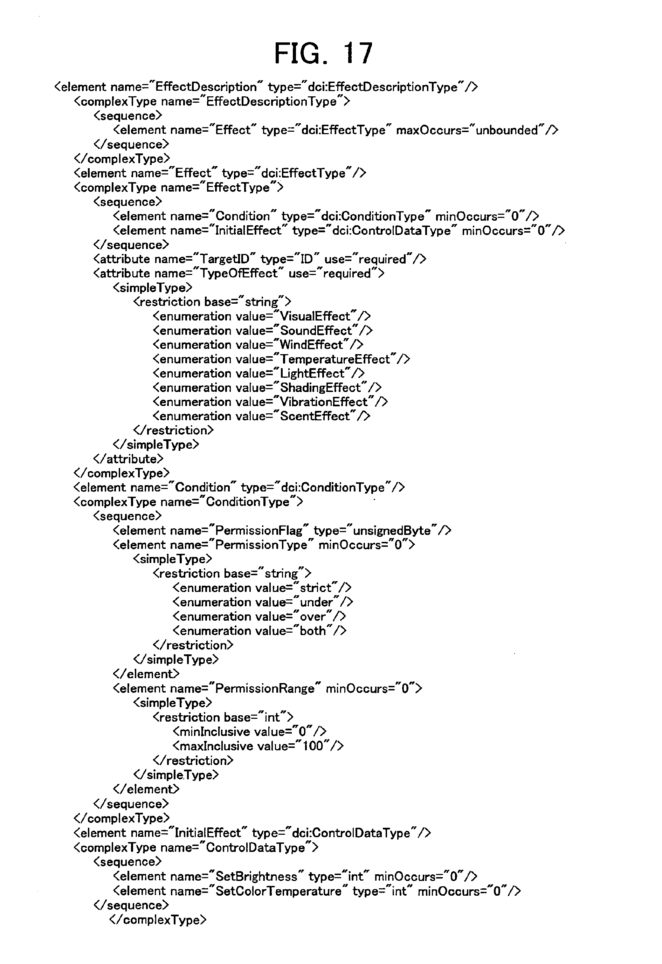

Fig. 17 is a view illustrating XML schema for the XML description shown in Fig. 16. Here, Permission Flag, Permission Type, and Permission Range are defined as child elements of a Condition element, but not necessarily limited thereto, and may be defined as attributes of a Condition element, for example. Alternatively, description may be possible as attributes or child elements of a route element of metadata (Effect Description, Device Control Description and the like).

In this manner, when a lighting device does not satisfy a designated lighting condition, it is even possible to turn lighting control of an entire content OFF in accordance with an intention of a producer (the second preference), therefore it is possible to avoid a problem that lighting is not consistent through an entire content such that lighting is turned ON in one scene while lighting is turned OFF in another scene, thus rather impairing a realistic sensation against the intention of the producer.

(Embodiment 4)
In the embodiments 1 to 3, examples where producer preference is applied for control designation values such as brightness (lx), a color temperature (K), wind speed (m/s), and a temperature (C°) are shown, and description will be given for an application example in a case where control designation values are quantized in accordance with a predetermined method.

Description will be given for a method of applying producer preference for quantized color temperature values (quantization index of color temperatures) with reference to drawings.

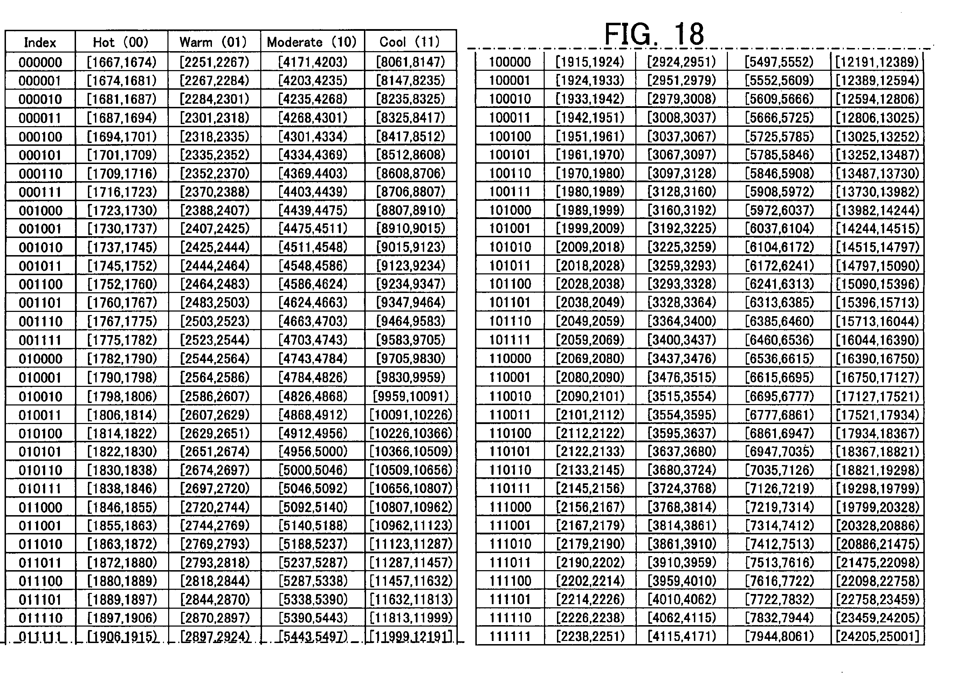

Fig. 18 is a view illustrating an example of quantization of color temperature values. A color temperature range 1667 (K) to 25000 (K) is classified into 4 categories (Hot, Warm, Moderate, and Cool) (2 bits), and color temperature values in each category are quantized in 6 bits.

For the quantized color temperature values (quantization index of color temperatures), it is possible to apply producer preference (permission type and permission range) in accordance with the following equations;

Strict        : $\mathrm{Min}\,(g(i))$ to $\mathrm{Max}\,(g(i))$

Under       : $\mathrm{Min}\,(g(i)) \times (1 - \mathrm{Range})$ to $\mathrm{Max}\,(g(i))$

Over        : $\mathrm{Min}\,(g(i))$ to $\mathrm{Max}\,(g(i)) \times (1 + \mathrm{Range})$

Both        : $\mathrm{Min}\,(g(i)) \times (1 - \mathrm{Range})$

to $\mathrm{Max}\,(g(i)) \times (1 + \mathrm{Range})$;

where
g(): inverse quantization function
i: quantization index
Range: permission range in producer preference (%)
Min(): minimum value
Max(): maximum value.

Description will be given for application of producer preference by taking a case where quantization index value = "01000000 (binary number)", that is, 2251 (K) or more and less than 2267 (K) are designated as control designation values as an example.

When a permission type of producer preference is "Strict", control at color temperature values indicated by a quantization index, that is, 2251 (K) or more and less than 2267 (K) is permitted.

When a permission type of producer preference is "Under" and a permission range is "10%", control at -10 % to ±0 % from color temperature values indicated by a quantization index, that is, 2026 (K) or more and less than 2267 (K) is permitted.

When a permission type of producer preference is "Over" and a permission range is "10%", control at ±0 % to +10 % from color temperature values indicated by a quantization index, that is, 2251 (K) or more and less than 2494 (K) is permitted.

When permission type of producer preference is "Both" and a permission range is "10%", control at -10 % to +10 % from color temperature values indicated by a quantization index, that is, 2026 (K) or more and less than 2494 (K) is permitted.

Alternatively, a permission range of producer preference may be a ratio when a maximum quantization index value is 100%. For example, permission ranges of quantization index values in the case of n-bit quantization are, respectively,

Strict    : $\pm 0$
Under     : -Range x $2^n$ to $\pm 0$
Over      : $\pm 0$ to +Range x $2^n$
Both      : -Range x $2^n$ to +Range x $2^n$.

Alternatively, a permission range may be described not by a rate but by a maximum difference value of quantization index values.

Strict    : $\pm 0$
Under     : -Range to $\pm 0$
Over      : $\pm 0$ to +Range
Both      : -Range to +Range

Note that, in the above-described configuration, producer preference is applied for color temperature values of lighting, however, when conditions of lighting are designated by RGB values and the like, may be applied for correlation color temperature values obtained in accordance with a predetermined conversion equation, or may be applied for an approximated value obtained from the designated RGB values in the case of luminance.

For example, it is possible to obtain a correlation color temperature T by converting a color system from an RGB color system to an XYZ color system, obtaining chromaticity coordinate (x, y) and approximating it using a predetermined function f as follows.

[Equation 1]

$$\begin{pmatrix} X \\ Y \\ Z \end{pmatrix} = \begin{bmatrix} 2.7689 & 1.7517 & 1.1302 \\ 1 & 4.5907 & 0.0601 \\ 0 & 0.0565 & 5.5943 \end{bmatrix} \cdot \begin{pmatrix} R \\ G \\ B \end{pmatrix}$$

$$x = \frac{X}{X+Y+Z}, y = \frac{Y}{X+Y+Z}$$

$$T = f(x, y)$$

In addition, the present invention is not limited to an application to a lighting device, but is applicable to various peripheral devices such as a fan and an air conditioner.

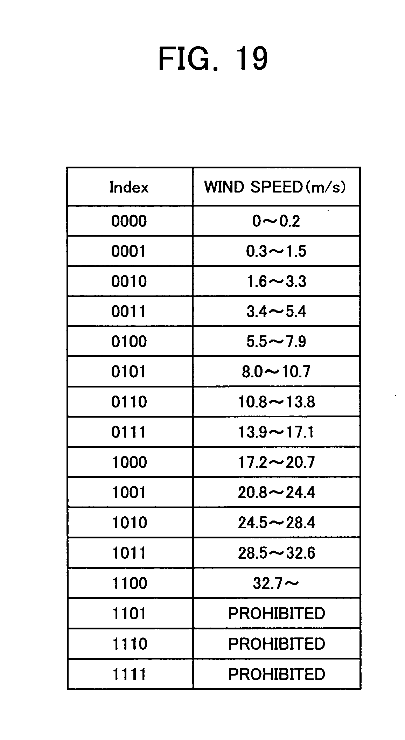

Fig. 19 is a view illustrating an example of quantization of wind speed values. Wind speed is classified into 13 categories and quantized to 4 bits. In this case, producer preference is also applicable in the same manner as the case of color temperatures. Note that, a control designation value is not limited to wind speed (m/s) but may also be revolutions per minute (rpm) of the fan and the like. Moreover, number of quantization bits is also not limited to the above.

(Embodiment 5)

In the embodiments 1 to 4, producer preference of a content of a content producer or a content provider (such as permission value relating to effect reproduction) for additional effects and a method for utilization thereof are mentioned. In the present embodiment, preference of a user who enjoys content additional effects and use of user preference in a content having producer preference will be shown.

Here, user preference is a description of user's taste, that usually describes attribute information of a user, a genre and a key word of a preferred content, or a method for operating a device. The user preference is used for personalizing an AV device such as extracting only a preferred genre from accumulated contents, enabling an execution of a series of device operations which are frequently performed with a single touch of a button, and the like. In the present embodiment, preference as to an operation of additional effects of a content is described in user preference in addition to the preference information as described above.

The additional effects of a content are, as described above, effects for improving a realistic sensation at the time of viewing/listening the content, including lighting control and controls of a scent effect and a vibration effect. These additional effects are effective for producing a highly realistic sensation. However, under an audio-visual environment condition of a user, for example, when the user does not desire to execute the effect for such a reason that a vibration effect annoys other people in viewing/listening at midnight, it is necessary to take measures such as setting execution of each effect to turn off or not connecting a reproduction device and devices to be controlled for producing additional effects for every reproduction of a content (for example, such as lighting device or vibration device). Therefore, it is possible for users to save their trouble and enjoy a realistic sensation depending on an audio-visual environment and fondness by the way that a device interprets the execution conditions described in user preference data as their preference.

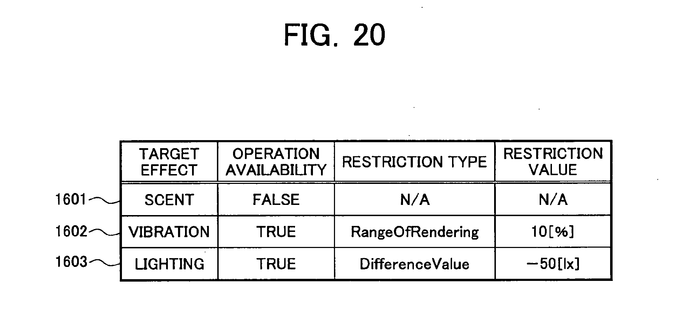

In user preference for additional effects of a content, execution conditions for an intended additional effect are described. Fig. 20 is exemplary data of user preference describing execution conditions for each additional effect. As shown in Fig. 20, user preference relating to reproduction of additional effects is comprised of fields of a target effect, operation availability, a restriction type and a restriction value. In the intended effect field, additional effects desired to control reproduction such as lighting are described. In the availability of operation field, availability of reproduction of additional effects described in the intended effect field is described by TRUE or FALSE.

When a value of the field is FALSE, the additional effect is turned off. In the case of being TRUE, it is indicated that there is restriction on execution. The restriction is described in the restriction type field and the restriction value field. In the restriction type field, a description method of the restriction value field is designated with an identifier. It is enough if it is possible to identify the description method of the restriction value field with the identifier, and in the present embodiment, Range Of Rendering that indicates a representation of percentage for a control designation value and Difference Value that indicates a representation of a difference value for a control designation value are used.

When the restriction type field is Range Of Rendering, it is noted that the restriction value field is in percentage representation for a control designation value, and in the case of Difference Value, it is noted that the restriction value field is a difference value for a control designation value.

The availability of operation field does not need to be TRUE and FALSE if it is possible to judge whether reproduction of additional effects is off or restricted, and may be a combination of 1 and 0, and the like.

In Fig. 20, 1601 denotes that, since the effect intended field indicates a scent effect and the availability of operation field is FALSE, when a scent effect is included in additional effects of a reproduced content, the scent effect is not executed. 1602 denotes a control in which the effect intended field is vibration, the availability of operation field is TRUE, and the restriction type field is Range Of Rendering, and thus it is indicated that the restriction value field has a percentage representation. That is, it is indicated that reproduction is performed at 10 % of a control designation value. Note that, in the case of reproducing at a value over a control designation value, reproduction is allowed by setting a value which is 100 % or more.

1603 denotes a control in which the effect intended field is lighting and the availability of operation field is TRUE, therefore restriction is posed on reproduction. Since the restriction type field is Difference Value, the restriction value field has a difference representation of a control designation value. Since the value in the restriction value field is -50, the lighting is reproduced at a value which is smaller than a control designation value designated in the content by 50 [lx]. At this time, a unit of the restriction value filed is determined depending on each additional effect. For example, it is lux (lx) in the case of lighting, and decibel (db) in the case of audio, and the like.

In this manner, in user preference for additional effects in the present invention, an effect to be intended and an operation thereof are described. Note that, an additional effect which is not described (restricted) in the user preference is executed at the very control designation value.

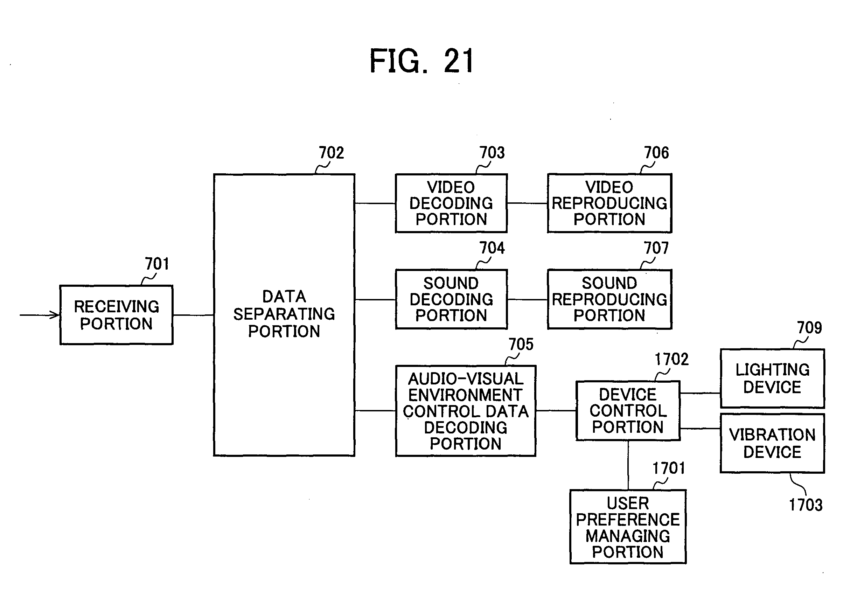

Description will be given below for a receiving apparatus with the use of user preference. Fig. 21 shows a data receiving apparatus in which the data receiving apparatus illustrated in Fig. 8 has a user preference managing portion 1701 to operate with the use of preference of a user and a device control portion 1702 whose function is expanded so as to be operable by adding user preference. In addition, a vibration device 1703 is added as a device to be controlled. Note that, in Fig. 21, common reference numerals are provided to ones having functions similar to the data receiving apparatus illustrated in Fig. 8.

In the present embodiment, it is assumed that user preference including control description for additional effects set by a user is accumulated in advance in the user preference managing portion 1701. As an example of the user preference managing portion 1701, a large capacity recording medium represented by a hard disk and a Blu-Ray disc attached to a data receiving apparatus and a small-sized semiconductor recording medium such as an SD card and a smart card are usable.

Similarly to the data receiving apparatus illustrated in Fig. 8, in the data receiving apparatus illustrated in Fig. 21, multiplexed data including video, sound, and audio-visual environment control data received by the receiving portion 701 is separated into each data of video coded data, sound coded data, and audio-visual environment control data by the data separating portion 702, and output to the video decoding portion 703, the sound decoding portion 704, and the audio-visual environment control data decoding portion 705, respectively. The video coded data is decoded by the video decoding portion 703 and reproduced by the video reproducing portion 706. The sound coded data is decoded by the sound decoding portion 704 and reproduced by the sound reproducing portion 707. In addition, the audio-visual environment control data is decoded by the audio-visual environment control data decoding portion 705 and output to the device control portion 1702. Here, the device control portion 1702 analyzes descriptive contents of the audio-visual environment control data that has been input and acquires user preference from the user preference managing portion 1701.

The device control portion 1702 compares the acquired user preference with the analyzed descriptive contents of the audio-visual environment control data and determines control availability and a control value of a device to be controlled. When it is determined that control is available, the determined control value is output to the lighting device 709 when an intended additional effect is lighting and to a vibration device 1703 in the case of a vibration effect for performing control.

In the present embodiment, in the data receiving apparatus illustrated in Fig. 21, the lighting device 709 and the vibration device 1703 are described as devices to be controlled by the device control portion 1702, however, a fan, an air conditioner, and a scent generating device may also be control objects. In addition, although it is configured such that data in which video, sound, and audio-visual environment control data are multiplexed is input in the data receiving apparatus illustrated in Fig. 21, it may also be configured such that video/sound multiplexed data and audio-visual environment control data are input from separate routes.

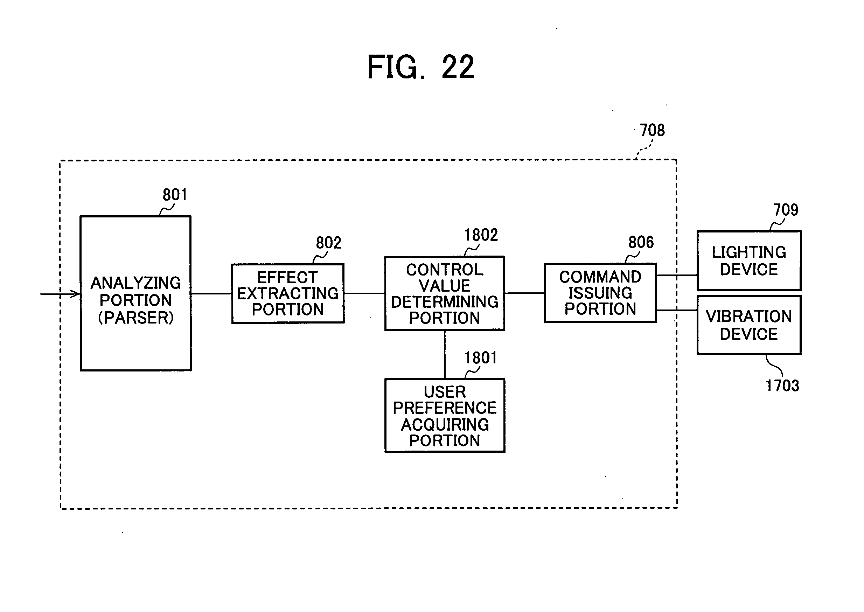

Here, description will be given for the device control portion 1702. Fig. 22 is a functional block diagram illustrating an internal configuration of the device control portion 1702, where the lighting device 709 and the vibration device 1703 are also described for the convenience of description.

The device control portion 1702 is comprised of an analyzing portion (parser) 801, an effect extracting portion 802, a control value determining portion 1802, a command issuing portion 806, and a user preference acquiring portion 1801. Note that, a common reference numeral is provided to one having a function similar to the device control portion 708 illustrated in Fig. 8.

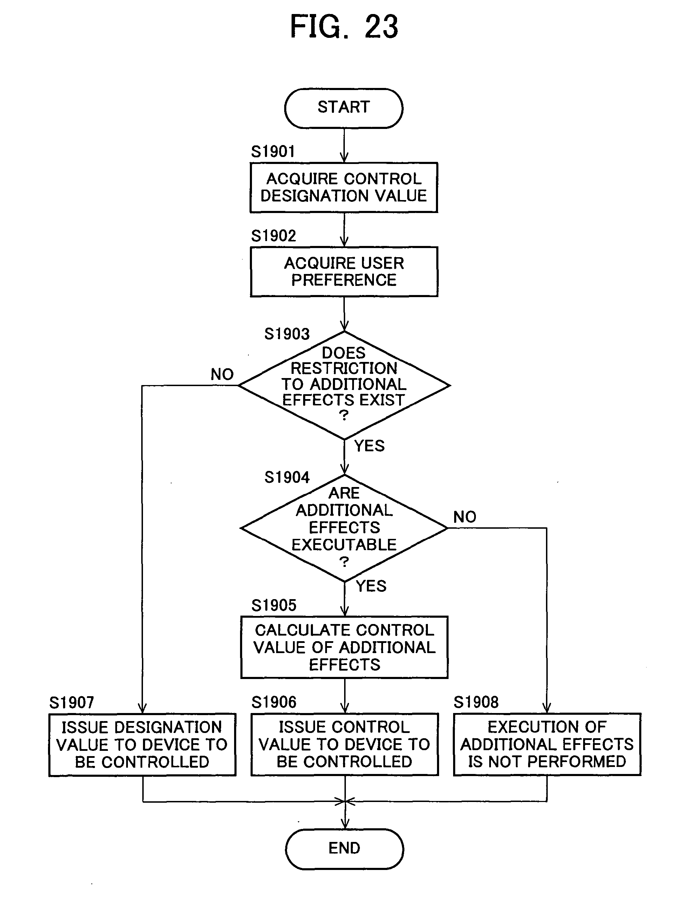

Fig. 23 is a flowchart for explaining operations of the device control portion 1702, and description will be given below based on the processing content of each step.

First, the analyzing portion 801 parses audio-visual environment control data output from the audio-visual environment control data decoding portion 705, and the effect extracting portion 802 acquires an additional effect attached to a content and a control designation value thereof (brightness, a color temperature, and intensity of vibration) among the audio-visual environment control data (step S1901).

Next, the flow goes to step S1902 and the user preference acquiring portion 1801 acquires user preference from the user preference managing portion 1701.

The control value determining portion 1802 judges whether the acquired additional effect is included in entry of additional effects of user preference description, that is, whether restriction to the additional effects exists (step S1903). When entry of an intended additional effect does not exist in user preference, then the flow goes to step S1907, and since there is no description in the user preference, the command issuing portion 806 issues a command for turning the device to be controlled ON at a control designation value of the additional effect.

When entry of the intended additional effect exists in the user preference at step S1903, the flow goes to step S1904, and an availability of operation field in user preference of an additional effect to be reproduced is checked. Here, when the availability of operation field is FALSE (reproduction of the additional effect is not performed), the flow goes to step S1908, and the command issuing portion 806 does not issue a command because no control is performed over the additional effect.

When the availability of operation field is TRUE at step S1904, the flow goes to step S1905, and the control value determining portion 1802 calculates a control value for additional effect control. Here, the control value determining portion 1802, when a control value of additional effects is described in user preference, calculates a control value based on a control value field included in the user preference for the control designation value extracted at step S1901. Alternatively, when a control value for additional effects is not described in user preference, the control designation value extracted at step S1901 is used.

At step S1906, the command issuing portion 806 issues a command for turning on the device to be controlled at the control value (brightness and a color temperature, or intensity of vibration) calculated by the control value determining portion 1802 to the device to be controlled (the lighting device 709 or the vibration device 1703).

The device control portion 1702 performs the above-described processing to all the additional effects included in the content.

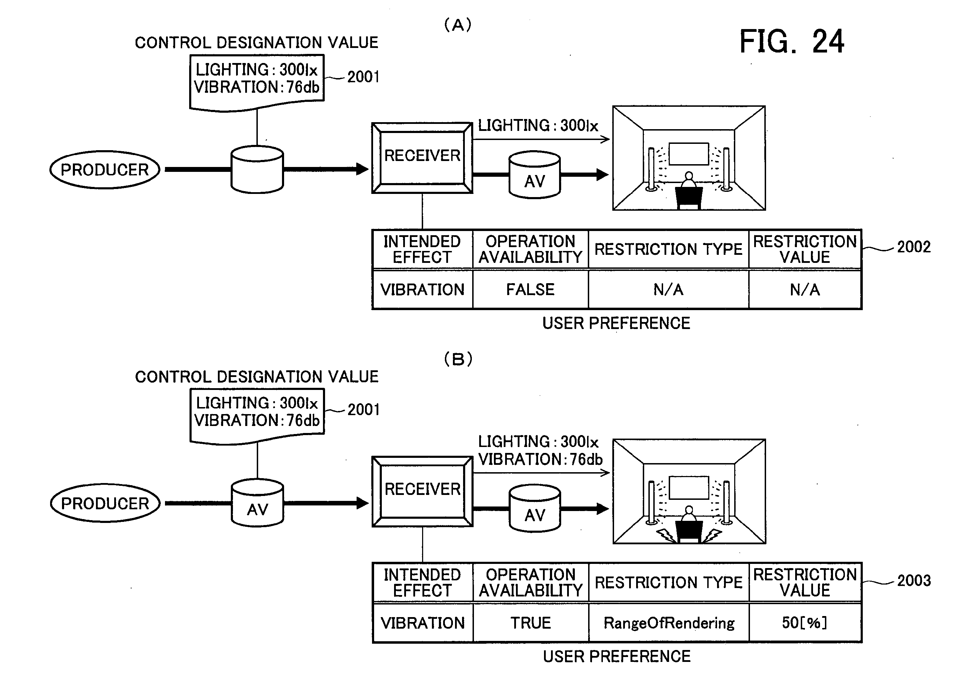

Fig. 24 is a view for explaining an example where user preference is applied.

In Fig. 24 (A), a control designation value 2001 relating to additional effects of vibration and lighting is added to a content. This shows that additional effects of vibration and lighting (vibrating in harmony with a scene and lighting is turned on in harmony with a video effect) are executed according to reproduction of the content. On the other hand, a user who performs reproduction has user preference 2002 which controls execution of additional effects of the content. The user preference 2002 describes that an additional effect of vibration is not executed. In this case, because of restriction for a vibration effect included in additional effects of the content, a reproducing device executes only the lighting effect.

On the other hand, in Fig. 24 (B), user preference 2003 describes that reproduction is performed by reducing a vibration effect by 50 %. In this case, a vibration effect included in additional effects of the content is executed at 38 db that is 50 % of the control designation value and a lighting effect is executed at 300 lx that is the control designation value 2001.

User preference mentioned so far is applied whenever the user preference data exists. However, preference of reproduction of additional effects sometimes changes depending on audio-visual situations. For example, it is considered that a user who has a family may desire to turn a vibration effect off so as not to annoy other people when viewing/listening a content including additional effects at midnight, and may desire to turn a lighting effect off when viewing/listening a content with the use of a mobile device in a public place such as an office and a train. In order to realize these, it is possible to introduce audio-visual environment information to user preference restricting additional effects.

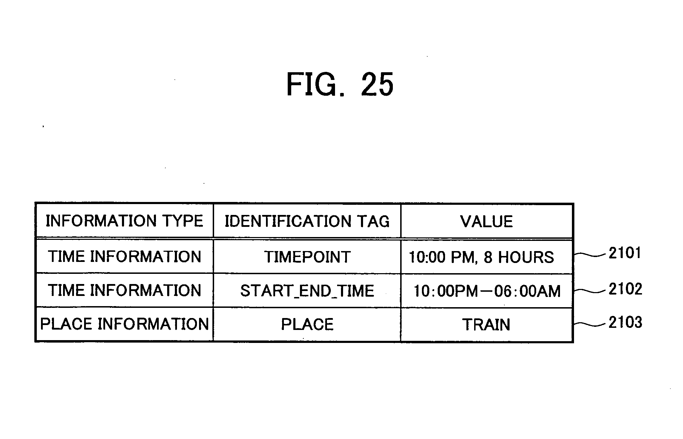

Fig. 25 is a view illustrating exemplary data describing information of an audio-visual environment in user preference. For description of audio-visual environment information, a place and a time are described. In a place information field, depending on an environment of a user, an office, a train, a living room, his/her own room and the like are described. As for a value to be described, it is enough if a data receiving apparatus is able to discriminate the value from an input of the user and an installation position of a device and not particularly limited. In a time information field, a plurality of descriptive formats are prepared, tags for identifying each of which are prepared, and specifically, formats illustrated in Fig. 25 are included.

In Fig. 25, a tag 2101 is a TIMEPOINT tag for representing by a standard time and a duration period. In addition, a tag 2102 is a START_END_TIME tag for representing by a start time and an ending time. A tag 2103 is a PLACE tag indicating a place. Descriptive formats are not limited thereto, and if discrimination of the descriptive formats is possible, a descriptive method such as MediaTime datatype prescribed in ISO/IEC 15938-5, MPEG-7 Part5: MDS may be used.

There may be at least either one of place information and time information in audio-visual environment information. For example, when place information does not exist, reproduction control of additional effects is performed in accordance with time information in any places, and when the both exist, reproduction control of additional effects is performed at a designated time in a designated place.

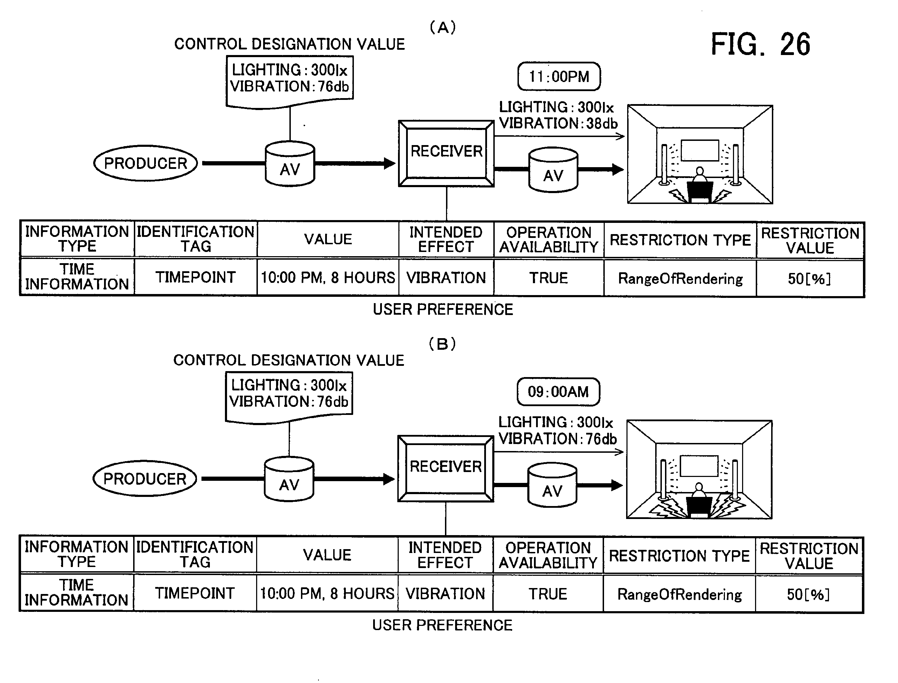

Fig. 26 is a view illustrating exemplary description of user preference with the use of audio-visual environment information and control information of additional effects.

In Fig. 26, a period of 8 hours from 10:00 PM (that is, until 06:00 AM) is designated as time information of audio-visual environment information, and a vibration effect at 50 % for an additional effect, it is described to execute. If the device control portion 1702 acquires and applies the user preference, when the user views/listens contents having a vibration effect and a lighting effect at 11:00 PM, the vibration effect is executed at 50 % of the control designation value (38 db) (Fig. 26 (A)). On the contrary, when the user views/listens the contents at 9:00 AM, because it falls out of the range of time information, a control by the user preference is not performed and the vibration effect is reproduced at the very control designation value (76 db) (Fig. 26 (B)).

In Fig. 26, an example of a case where time information exists as audio-visual environment information is illustrated, however, it is also similar to a case where place information is included in audio-visual environment information. In this case, the device control portion 1702 also acquires information of a place where the user views/listens from a not-shown position acquiring information portion.

For example, when a receiving apparatus has a function of GPS (Global Positioning System) reception, a place may be specified from position information and map information received from the GPS, and a position of the receiving apparatus may be specified with the use of RFID by installing the RFID in the receiving apparatus and a place for viewing/listening (for example, an entrance of each room of a house and inside a train car) and communicating between the receiving apparatus and the place for viewing/listening by the RFID.

Alternatively, the receiving apparatus may acquire position information from a mobile phone held by a user, an access point of a communication network such as a LAN (Local Area Network), or the like, and the acquiring means is no object if the device control portion 1702 is able to specify place information of the receiving apparatus. In addition, when a position information acquiring portion does not exist in the receiving apparatus, the device control portion 1702 may inquire of a user about a place for viewing/listening at the time of viewing/listening a content including additional effects. In this manner, the device control portion 1702 is thereby able to apply user preference shown in Fig. 25 similarly to time information by acquiring place information.

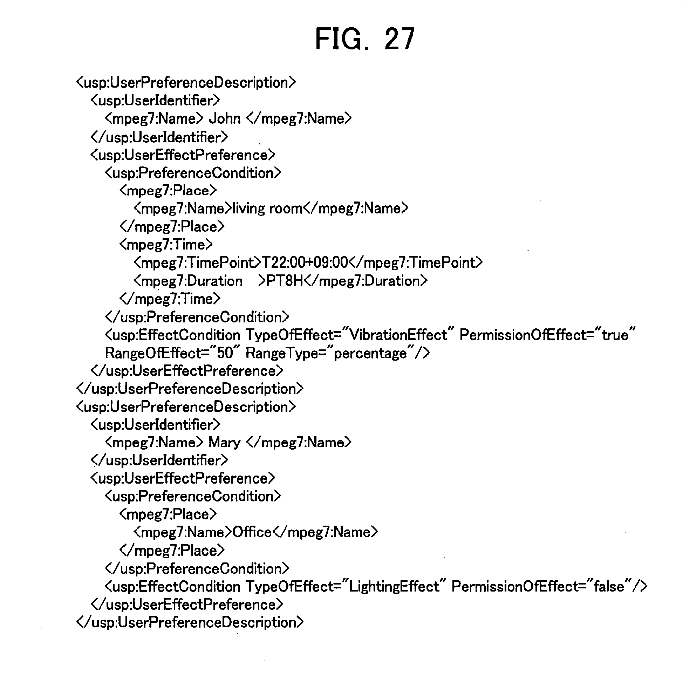

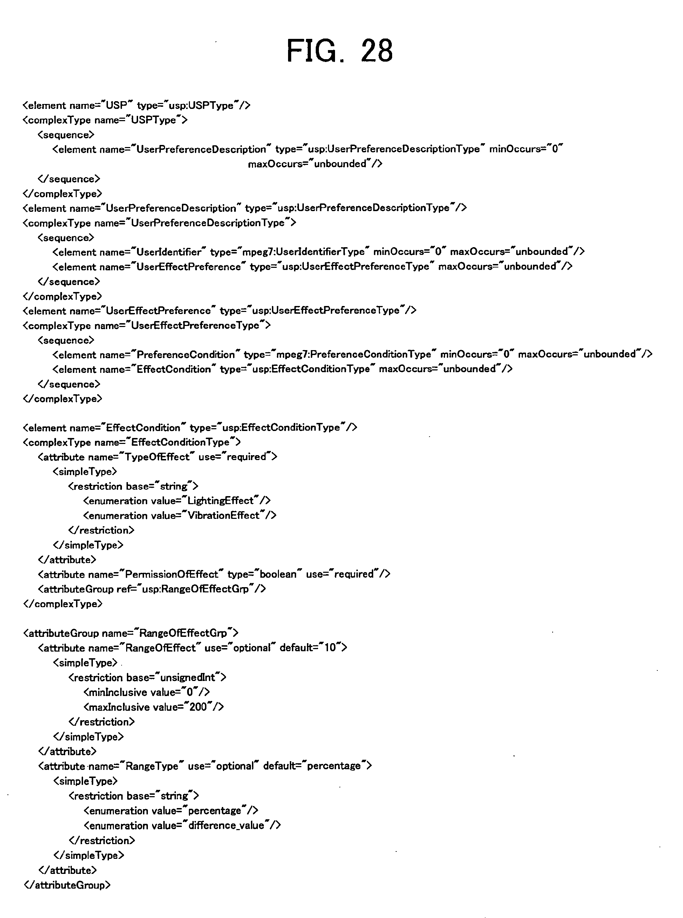

Fig. 27 is an example in which user preference is described in XML. In Fig. 27, for describing user information, time information and place information, the format specified in ISO/IEC 15938-5, MPEG-7 Part5: MDS is used. In Fig. 27, preferences of John and Mary as users are described. The preference of John indicates that a vibration effect is executed at 50 % of a control designation value when viewing/listening is performed from 10:00 PM to 06:00 AM in a living room. On the other hand, the preference of Mary indicates that a lighting effect is not executed whenever viewing/ listening is performed in an office. Fig. 28 is an example of representation in XML schema for the XML description of Fig. 27.

In addition, when 2 or more people having preference view/listen a content having additional effects, only additional effects common to users may be focused or control of additional effects satisfying all the respective preference may be performed.

For example, if John and Mary view/listen a content together, the preference of John describes preference of turning off a lighting effect and a vibration effect of 50 %, and the preference of Mary describes preference of a lighting effect of 70 % and turning off a scent effect, when only a common additional effect is restricted, only the lighting effect is restricted and the vibration effect and the scent effect are not restricted.

On the other hand, in the case of executing so as to satisfy all the preference, execution of the lighting effect, the vibration effect, and the scent effect are restricted.

Note that, although a restriction method of each effect is not particularly limited, for example, in the case of a lighting effect, a control value for executing a more additional effect (70 % of Mary) may be selected or a more restricted value (turning off of John) may be selected.

In addition, user information may be set by an individual as shown in Fig. 27 or may be set for a group such as a family.

Further, in user preference mentioned so far, all the control for additional effects desired by a user have to be described. That is, in a case where only a lighting effect is desired to be effective among several types of additional effects included in a content (a lighting effect, a vibration effect, a scent effect, etc.), and the like, description has to be made such that all the additional effects considered to be included in the content other than the lighting effect are not executed. In order to avoid this, an additional effect whose execution is permitted is described in user preference and filtering of additional effects may be performed.

Specifically, description indicating execution permission is prepared and set in user preference for realization. In this example, the description takes either value of Allow or Deny. When a value of the description is Allow, only a described additional effect is permitted to be executed, and an additional effect which is not described is not executed. When a value of the description is Deny, the described additional effect is not executed, and it is possible to execute an additional effect other than the description.

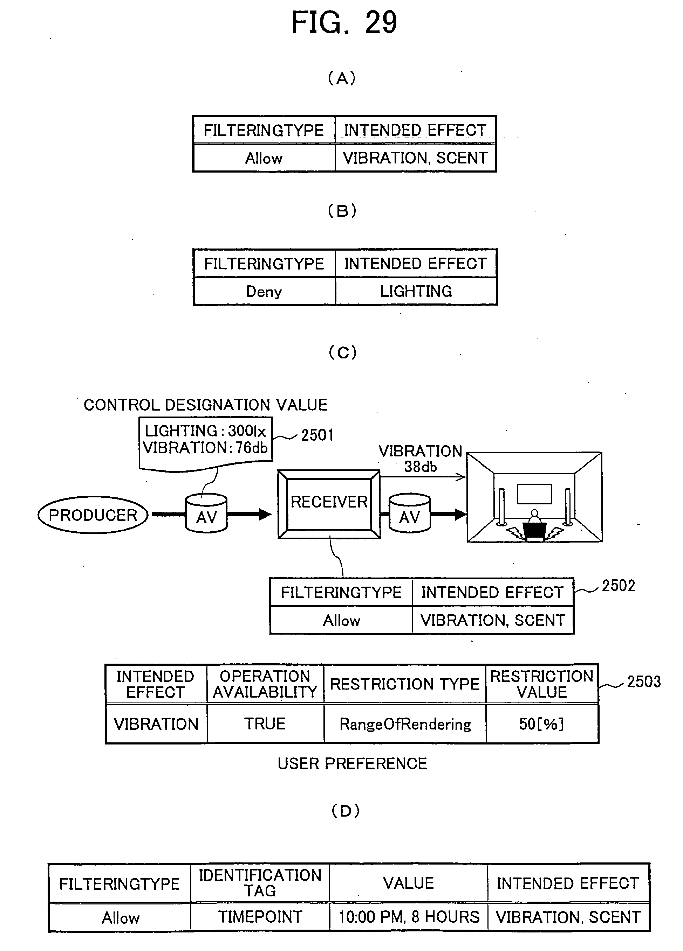

Fig. 29 illustrates exemplary description of filtering by user preference.

In Fig. 29 (A), Allow is set for vibration and scent effects. In this case, although the vibration and scent effects are executed, the other additional effects are not executed. Similarly, in Fig. 29 (B), Deny is set for a lighting effect. In the preference, the additional effect of lighting is not executed. Fig. 29 (C) illustrates an operation example. When viewing/ listening a content having producer preference 2501 of lighting and vibration under user preferences 2502 and 2503, only vibration and scent are permitted to be executed in the user preference 2502, thus the additional effect of lighting is not executed and only the vibration effect is to be executed. However, since there is the user preference 2503 for executing at 50 % of the control designation value, the vibration effect is executed at a value which is 50 % of the control designation value, that is, 38 db.

Further, filtering of additional effects depending on an audio-visual environment may be realized by combining the filtering with audio-visual environment information like in Fig. 29 (D). Fig. 29 (D) illustrates that only vibration and scent effects are permitted to be executed during 8 hours from 10:00 PM. In this example, execution permission of additional effects is explained using Allow and Deny, however, is not limited thereto as far as execution permission in each additional effect is distinguishable. As described above, it is possible to execute an additional effect desired by a user at a value depending on preference by applying the additional effect control for an additional effect which is permitted to be executed by filtering.

In the present embodiment, for description of user preference, a reproduction state of individual additional effects is described, however, description may be performed for not only an additional effect but also a specified parameter. For example, as for a lighting effect, control information may be described for each of brightness and luminance. In addition, when audio-visual environment control data relating to operations of a blinking effect of lighting and the like is included in a content, description controlling a blinking interval and the like may be performed in user preference.

In this manner, a reproduction state of additional effects is described in user preference, so that a reproduction method of additional effects preferred by a user and reproduction of additional effects suitable for a time and a place for viewing/listening are possible even without performing setting of operations of peripheral devices for every viewing/ listening.

EXPLANATIONS OF REFERENCE NUMERALS

101...video coding portion; 102...sound coding portion; 103...audio-visual environment control data coding portion; 104...audio-visual environment control data input portion; 105...data multiplexing portion; 106... transmitting portion; 201...effect input portion; 202...preference input portion; 203...format portion; 701...receiving portion; 702...data separating portion; 703...video decoding portion; 704...sound decoding portion; 705...audio-visual environment control data decoding portion; 706...video reproducing portion; 707...sound reproducing portion; 708, 1702...device control portion; 709...lighting device; 801...analyzing portion (parser) ; 802...effect extracting portion; 803...preference extracting portion; 804...device capability acquiring portion; 805, 1802...control value determining portion; 806...command issuing portion; 1401...audio-visual environment control data transmitting portion; 1402...audio-visual environment control data server; 1403...accumulating portion; 1501...audio-visual environment control data receiving portion; 1701...user preference managing portion; 1703...vibration device; and 1801...user preference acquiring portion.

**Claims**

1.  A data transmitting apparatus comprising transmitting means for multiplexing and transmitting video data and/or sound data, and audio-visual environment control data for one or more peripheral device in an audio-visual environment space where the video data and/or the sound data is reproduced, wherein
    the audio-visual environment control data includes a control designation value for the peripheral device, and producer preference information indicating an error permission range for the control designation value.

2.  A data transmitting apparatus comprising transmitting means for transmitting multiplexed data in which video data and/or sound data, and identification information for identifying audio-visual environment control data for one or more peripheral device in an audio-visual environment space where the video data and/or the sound data is reproduced are multiplexed, and the audio-visual environment control data, wherein
    the audio-visual environment control data includes a control designation value for the peripheral device, and producer preference information indicating an error permission range for the control designation value.

3.  A data transmitting apparatus comprising transmitting means for transmitting, upon reception of a request from outside, audio-visual environment control data for one or more peripheral device in an audio-visual environment space where predetermined video data and/or sound data is reproduced, wherein
    the audio-visual environment control data includes a control designation value for the peripheral device, and producer preference information indicating an error permission range for the control designation value.

4.  The data transmitting apparatus as defined in any one of claims 1 to 3, wherein
    the producer preference information includes permission type information for allowing to control the peripheral device only using the control designation value.

5.  The data transmitting apparatus as defined in any one of claims 1 to 3, wherein
    the producer preference information includes permission type information for allowing to control the peripheral device using a value under the control designation value.

6.  The data transmitting apparatus as defined in any one of claims 1 to 3, wherein
    the producer preference information includes permission type information for allowing to control the peripheral device using a value over the control designation value.

7.  The data transmitting apparatus as defined in any one of claims 1 to 3, wherein
    the producer preference information includes permission type information for allowing to control the peripheral device using a value within a predetermined range including the control designation value.

8.  The data transmitting apparatus as defined in any one of claims 5 to 7, wherein
    the producer preference information includes proximity permission range information indicating a range in which the value is allowed in a ratio to the control designation value.

9.  The data transmitting apparatus as defined in any one of claims 1 to 8, wherein
    the control designation value is represented by a quantized value.

**10.** The data transmitting apparatus as defined in any one of claims 1 to 9, wherein
the producer preference information is described as an XML attribute.

**11.** The data transmitting apparatus as defined in any one of claims 1 to 9, wherein
the producer preference information is described as an XML element.

**12.** The data transmitting apparatus as defined in any one of claims 1 to 11, wherein
the audio-visual environment control data is described by a scene unit of the video data.

**13.** The data transmitting apparatus as defined in any one of claims 1 to 11, wherein
the audio-visual environment control data is described by a shot unit of the video data.

**14.** The data transmitting apparatus as defined in any one of claims 1 to 11, wherein
the audio-visual environment control data is described by a frame unit of the video data.

**15.** The data transmitting apparatus as defined in any one of claims 1 to 14, wherein
the audio-visual environment control data is lighting control data for one or more lighting device in the audio-visual
environment space.

**16.** A data receiving apparatus comprising receiving means for receiving multiplexed data including video data and/or
sound data, and audio-visual environment control data for one or more peripheral device in an audio-visual environment space where the video data and/or the sound data is reproduced, wherein
the audio-visual environment control data includes a control designation value for the peripheral device, and producer
preference information indicating an error permission range for the control designation value.

**17.** A data receiving apparatus comprising receiving means for receiving multiplexed data including video data and/or
sound data, and identification information for identifying audio-visual environment control data for one or more
peripheral device in an audio-visual environment space where the video data and/or the sound data is reproduced,
and receiving the audio-visual environment control data based on the identification information, wherein
the audio-visual environment control data includes a control designation value for the peripheral device, and producer
preference information indicating an error permission range for the control designation value.

**18.** A data receiving apparatus comprising receiving means for receiving video data and/or sound data, and receiving
audio-visual environment control data for one or more peripheral device in an audio-visual environment space where
the video data and/or the sound data is reproduced based on a user request, wherein
the audio-visual environment control data includes a control designation value for the peripheral device, and producer
preference information indicating an error permission range for the control designation value.

**19.** The data receiving apparatus as defined in any one of claims 16 to 18, wherein
the producer preference information includes permission type information for allowing to control the peripheral device
only with the control designation value.

**20.** The data receiving apparatus as defined in any one of claims 16 to 18, wherein
the producer preference information includes permission type information for allowing to control the peripheral device
using a value under the control designation value.

**21.** The data receiving apparatus as defined in any one of claims 16 to 18, wherein
the producer preference information includes permission type information for allowing to control the peripheral device
using a value over the control designation value.

**22.** The data receiving apparatus as defined in any one of claims 16 to 18, wherein
the producer preference information includes permission type information for allowing to control the peripheral device
using a value within a predetermined range including the control designation value.

**23.** The data receiving apparatus as defined in any one of claims 20 to 22, wherein
the producer preference information includes proximity permission range information indicating a range in which
the value is allowed in a ratio to the control designation value.

**24.** The data receiving apparatus as defined in any one of claims 16 to 23, wherein
the control designation value is represented by a quantized value.

**25.** The data receiving apparatus as defined in any one of claims 16 to 24, wherein
the producer preference information is shown by an XML attribute.

**26.** The data receiving apparatus as defined in any one of claims 16 to 24, wherein
the producer preference information is shown by an XML element.

**27.** The data receiving apparatus as defined in any one of claims 16 to 26, wherein
the audio-visual environment control data is shown by a scene unit of the video data.

**28.** The data receiving apparatus as defined in any one of claims 16 to 26, wherein
the audio-visual environment control data is shown by a shot unit of the video data.

**29.** The data receiving apparatus as defined in any one of claims 16 to 26, wherein
the audio-visual environment control data is shown by a frame unit of the video data.

**30.** The data receiving apparatus as defined in any one of claims 16 to 29, wherein
the audio-visual environment control data is lighting control data for one or more lighting device in the audio-visual
environment space.

**31.** The data receiving apparatus as defined in any one of claims 16 to 30, further comprising acquiring means for
acquiring user preference data for restricting operations of the peripheral device based on the audio-visual environment control data.

**32.** The data receiving apparatus as defined in claim 31, wherein
the user preference data includes availability of operation information for the peripheral device and/or restriction
information for the control designation value.

**33.** The data receiving apparatus as defined in claim 31 or 32, wherein
the user preference data includes audio-visual environment information describing conditions for applying the user
preference data.

**34.** The data receiving apparatus as defined in claim 33, wherein
the audio-visual environment information includes information of a time and/or a place to which the user preference
data is applied.

**35.** A data transmitting method for multiplexing and transmitting video data and/or sound data, and audio-visual environment control data for one or more peripheral device in an audio-visual environment space where the video data
and/or the sound data is reproduced, wherein
the audio-visual environment control data includes a control designation value for the peripheral device, and producer
preference information indicating an error permission range for the control designation value.

**36.** A data transmitting method for transmitting multiplexed data in which video data and/or sound data, and identification
information for identifying audio-visual environment control data for one or more peripheral device in an audio-visual
environment space where the video data and/or the sound data is reproduced are multiplexed, and the audio-visual
environment control data, wherein
the audio-visual environment control data includes a control designation value for the peripheral device, and producer
preference information indicating an error permission range for the control designation value.

**37.** A data transmitting method for transmitting, upon reception of a request from outside, audio-visual environment
control data for one or more peripheral device in an audio-visual environment space where predetermined video
data and/or sound data is reproduced, wherein
the audio-visual environment control data includes a control designation value for the peripheral device, and producer
preference information indicating an error permission range for the control designation value.

**38.** A data receiving method for receiving multiplexed data including video data and/or sound data, and audio-visual environment control data for one or more peripheral device in an audio-visual environment space where the video data and/or the sound data is reproduced, wherein
the audio-visual environment control data includes a control designation value for the peripheral device, and producer preference information indicating an error permission range for the control designation value.

**39.** A data receiving method for receiving multiplexed data including video data and/or sound data, and identification information for identifying audio-visual environment control data for one or more peripheral device in an audio-visual environment space where the video data and/or the sound data is reproduced, and receiving the audio-visual environment control data based on the identification information, wherein
the audio-visual environment control data includes a control designation value for the peripheral device, and producer preference information indicating an error permission range for the control designation value.

**40.** A data receiving method for receiving video data and/or sound data, and receiving audio-visual environment control data for one or more peripheral device in an audio-visual environment space where the video data and/or the sound data is reproduced based on a user request, wherein
the audio-visual environment control data includes a control designation value for the peripheral device, and producer preference information indicating an error permission range for the control designation value.

**41.** An audio-visual environment controlling method for receiving multiplexed data including video data and/or sound data, and audio-visual environment control data for one or more peripheral device in an audio-visual environment space where the video data and/or the sound data is reproduced, wherein
the audio-visual environment control data includes a control designation value for the peripheral device, and producer preference information indicating an error permission range for the control designation value.

**42.** An audio-visual environment controlling method for receiving multiplexed data including video data and/or sound data, and identification information for identifying audio-visual environment control data for one or more peripheral device in an audio-visual environment space where the video data and/or the sound data is reproduced, and receiving the audio-visual environment control data based on the identification information, wherein
the audio-visual environment control data includes a control designation value for the peripheral device, and producer preference information indicating an error permission range for the control designation value.

**43.** An audio-visual environment controlling method for receiving video data and/or sound data, and receiving audio-visual environment control data for one or more peripheral device in an audio-visual environment space where the video data and/or the sound data is reproduced based on a user request, wherein
the audio-visual environment control data includes a control designation value for the peripheral device, and producer preference information indicating an error permission range for the control designation value.

**44.** A data receiving apparatus, comprising:

receiving means for receiving multiplexed data including video data and/or sound data, and audio-visual environment control data for one or more peripheral device in an audio-visual environment space where the video data and/or the sound data is reproduced; and
acquiring means for acquiring user preference data for restricting operations of the peripheral device based on the audio-visual environment control data, wherein
the audio-visual environment control data includes at least a control designation value for the peripheral device, and
the user preference data includes availability of operation information for the peripheral device and/or restriction information for the control designation value.

**45.** A data receiving apparatus, comprising:

receiving means for receiving multiplexed data including video data and/or sound data, and identification information for identifying audio-visual environment control data for one or more peripheral device in an audio-visual environment space where the video data and/or the sound data is reproduced, and receiving the audio-visual environment control data based on the identification information; and
acquiring means for acquiring user preference data for restricting operations of the peripheral device based on the audio-visual environment control data, wherein
the audio-visual environment control data includes at least a control designation value for the peripheral device, and
the user preference data includes availability of operation information for the peripheral device and/or restriction information for the control designation value.

**46.** A data receiving apparatus, comprising:

receiving means for receiving video data and/or sound data, and receiving audio-visual environment control data for one or more peripheral device in an audio-visual environment space where the video data and/or the sound data is reproduced based on a user request; and
acquiring means for acquiring user preference data for restricting operations of the peripheral device based on the audio-visual environment control data, wherein
the audio-visual environment control data includes at least a control designation value for the peripheral device, and
the user preference data includes availability of operation information for the peripheral device and/or restriction information for the control designation value.

**47.** The data receiving apparatus as defined in any one of claims 44 to 46, wherein
the user preference data includes audio-visual environment information describing conditions for applying the user preference data.

**48.** The data receiving apparatus as defined in claim 47, wherein
the audio-visual environment information includes information of a time and/or a place to which with the user preference is applied.

**49.** A data receiving method, comprising:

receiving multiplexed data including video data and/or sound data, and audio-visual environment control data for one or more peripheral device in an audio-visual environment space where the video data and/or the sound data is reproduced; and
acquiring user preference data for restricting operations of the peripheral device based on the audio-visual environment control data, wherein
the audio-visual environment control data includes at least a control designation value for the peripheral device, and
the user preference data includes availability of operation information for the peripheral device and/or restriction information for the control designation value.

**50.** A data receiving method, comprising:

receiving multiplexed data including video data and/or sound data, and identification information for identifying audio-visual environment control data for one or more peripheral device in an audio-visual environment space where the video data and/or the sound data is reproduced, and receiving the audio-visual environment control data based on the identification information; and
acquiring user preference data for restricting operations of the peripheral device based on the audio-visual environment control data, wherein
the audio-visual environment control data includes at least a control designation value for the peripheral device, and
the user preference data includes availability of operation information for the peripheral device and/or restriction information for the control designation value.

**51.** A data receiving method, comprising:

receiving video data and/or sound data, and receiving audio-visual environment control data for one or more peripheral device in an audio-visual environment space where the video data and/or the sound data is reproduced based on a user request; and
acquiring user preference data for restricting operations of the peripheral device based on the audio-visual environment control data, wherein
the audio-visual environment control data includes at least a control designation value for the peripheral device, and

the user preference data includes operation availability information for the peripheral device and/or restriction information for the control designation value.

# FIG. 1

VIDEO DATA → VIDEO CODING PORTION `101`

SOUND DATA → SOUND CODING PORTION `102`

AUDIO-VISUAL ENVIRONMENT CONTROL DATA INPUT PORTION `104`

AUDIO-VISUAL ENVIRONMENT CONTROL DATA CODING PORTION `103`

DATA MULTIPLEXING PORTION `105`

TRANSMITTING PORTION `106` →

EP 2 315 441 A1

FIG. 2

# FIG. 3

104

# FIG. 4

| EFFECT TYPE | CONDITIONS | MEANING |
|---|---|---|
| LIGHTING | BRIGHTNESS | DESIGNATE BRIGHTNESS OF LIGHTING IN AUDIO-VISUAL ENVIRONMENT RECOMMENDED BY PRODUCER(UNIT:lx) |
| | COLOR TEMPERATURE | DESIGNATE COLOR TEMPERATURE OF LIGHTING IN AUDIO-VISUAL ENVIRONMENT RECOMMENDED BY PRODUCER(UNIT:K) |
| WIND | WIND SPEED | DESIGNATE WIND SPEED IN AUDIO-VISUAL ENVIRONMENT RECOMMENDED BY PRODUCER(UNIT:m/s) |
| TEMPERATURE | TEMPERATURE | DESIGNATE TEMPERATURE IN AUDIO-VISUAL ENVIRONMENT RECOMMENDED BY PRODUCER(UNIT:°C) |

# FIG. 5

(A)

PERMISSION TYPE

| PERMISSION TYPE | MEANING |
|---|---|
| "Strict" | REPRODUCTION ONLY AT DESIGNATION VALUE IS ALLOWED |
| "Under" | THE USE OF APPROXIMATE VALUE UNDER DESIGNATION VALUE IN STEAD OF DESIGNATION VALUE IS ALLOWED |
| "Over" | THE USE OF APPROXIMATE VALUE OVER DESIGNATION VALUE IN STEAD OF DESIGNATION VALUE IS ALLOWED |
| "Both" | THE USE OF APPROXIMATE VALUE UNDER DESIGNATION VALUE IN STEAD OF DESIGNATION VALUE IS ALLOWED OR OVER DESIGNATION VALUE IS ALLOWED |

(B)

PERMISSION RANGE

| PERMISSION RANGE | MEANING |
|---|---|
| Range | DESIGNATE PROXIMITY PERMISSION RANGE FOR DESIGNATION VALUE IN PERCENTAGE |

# FIG. 6

(A)

```
<DeviceControlDescription>
    <DeviceControlData RefTargetID="light1">
        <ControlData Permission="Strict">
            <SetBrightness>300</SetBrightness>
            <SetColorTemperature>3000</SetColorTemperature>
        </ControlData>
        <ControlData Permission="Under" Range="10">
            <SetBrightness>200</SetBrightness>
            <SetColorTemperature>3000</SetColorTemperature>
        </ControlData>
    </DeviceControlData>
    <DeviceControlData RefTargetID="light2">
        <ControlData Permission="Over" Range="10">
            <SetBrightness>400</SetBrightness>
            <SetColorTemperature>4000</SetColorTemperature>
        </ControlData>
        <ControlData Permission="Both" Range="10">
            <SetBrightness>400</SetBrightness>
            <SetColorTemperature>5000</SetColorTemperature>
        </ControlData>
    </DeviceControlData>
</DeviceControlDescription>
```

(B)

# FIG. 7

```
<element name="DeviceControlDescription" type="dci:DeviceControlDescriptionType"/>
<complexType name="DeviceControlDescriptionType">
    <sequence>
        <element name="DeviceControlData" type="dci:DeviceControlDataType"
          maxOccurs="unbounded"/>
    </sequence>
</complexType>
<element name="DeviceControlData" type="dci:DeviceControlDataType"/>
<complexType name="DeviceControlDataType">
    <sequence maxOccurs="unbounded">
        <element name="ControlData" type="dci:ControlDataType"/>
    </sequence>
    <attribute name="RefTargetID" type="IDREF"/>
</complexType>
<element name="ControlData" type="dci:ControlDataType"/>
<complexType name="ControlDataType">
    <sequence>
        <element name="SetBrightness" type="int" minOccurs="0"/>
        <element name="SetColorTemperature" type="int" minOccurs="0"/>
    </sequence>
    <attributeGroup ref="dci:ProviderPreference"/>
</complexType>
<attributeGroup name="ProviderPreference">          ⟍⟋ PREFERENCE
    <attribute name="Permission" use="optional">
        <simpleType>
            <restriction base="string">
                <enumeration value="Strict"/>
                <enumeration value="Under"/>
                <enumeration value="Over"/>
                <enumeration value="Both"/>
            </restriction>
        </simpleType>
    </attribute>
    <attribute name="Range" use="optional">
        <simpleType>
            <restriction base="unsignedInt">
                <minInclusive value="0"/>
                <maxInclusive value="100"/>
            </restriction>
        </simpleType>
    </attribute>
</attributeGroup>
```

# FIG. 8

RECEIVING PORTION 701

DATA SEPARATING PORTION 702

VIDEO DECODING PORTION 703

VIDEO REPRODUCING PORTION 706

SOUND DECODING PORTION 704

SOUND REPRODUCING PORTION 707

AUDIO-VISUAL ENVIRONMENT CONTROL DATA DECODING PORTION 705

DEVICE CONTROL PORTION 708

LIGHTING DEVICE 709

EP 2 315 441 A1

# FIG. 9

# FIG. 10

EP 2 315 441 A1

# FIG. 11

START

S91
ACQUIRE LIGHTING
CONDITION
(DESIGNATION VALUE)

S92
ACQUIRE DEVICE
CAPABILITY

S93
DOES
DESIGNATION
VALUE FALL WITHIN
SUPPORT
RANGE
?

YES → S94
TURN LIGHTING ON AT
DESIGNATION VALUE

NO
S95
ACQUIRE PREFERENCE

S96
IS SUPPORT
POSSIBLE WITHIN
PERMISSION
RANGE
?

NO → S97
TURN LIGHTING OFF

YES
S98
DETERMINE
APPROXIMATE VALUE

S99
TURN LIGHTING ON AT
APPROXIMATE VALUE

END

# FIG. 12

DESIGNATION VALUE:300(lx)
PREFERENCE:Under 10%

PERMISSION RANGE:270 TO 300(lx)

BRIGHTNESS(lx)

| RANGE OF LIGHTING DEVICE B | RANGE OF LIGHTING DEVICE A | RANGE OF LIGHTING DEVICE C |
|---|---|---|
| 230~280(lx) | 290~340(lx) | 360~410(lx) |
| EVEN BEING OUT OF RANGE OF LIGHTING DEVICE B, LIGHTING IS TURNED ON AT APPROXIMATE VALUE (=280lx)WITHIN PERMISSION RANGE | BEING WITHIN RANGE OF LIGHTING DEVICE A, LIGHTING IS TURNED ON AT DESIGNATION VALUE(=300lx) | BEING OUT OF RANGE OF LIGHTING DEVICE C AND OUT OF PERMISSION RANGE, LIGHTING IS TURNED OFF |

EP 2 315 441 A1

# FIG. 13

(A)

```
<DeviceControlDescription Permission="Both" Range="10">
    <DeviceControlData RefTargetID="light1" Permission="Strict">
        <ControlData Permission="Over" Range="5">
            <SetBrightness>300</SetBrightness>
            <SetColorTemperature>3000</SetColorTemperature>
        </ControlData>
        <ControlData>
            <SetBrightness>200</SetBrightness>
            <SetColorTemperature>3000</SetColorTemperature>
        </ControlData>
    </DeviceControlData>
    <DeviceControlData RefTargetID="light2">
        <ControlData Permission="Under" Range="5">
            <SetBrightness>400</SetBrightness>
            <SetColorTemperature>4000</SetColorTemperature>
        </ControlData>
        <ControlData>
            <SetBrightness>400</SetBrightness>
            <SetColorTemperature>5000</SetColorTemperature>
        </ControlData>
    </DeviceControlData>
</DeviceControlDescription>
```

(B)

# FIG. 14

```
<element name="DeviceControlDescription" type="dci:DeviceControlDescriptionType"/>
<complexType name="DeviceControlDescriptionType">
    <sequence>
        <element name="DeviceControlData" type="dci:DeviceControlDataType"
        maxOccurs="unbounded"/>
    </sequence>
    <attributeGroup ref="dci:ProviderPreference"/>              PREFERENCE
</complexType>
<element name="DeviceControlData" type="dci:DeviceControlDataType"/>
<complexType name="DeviceControlDataType">
    <sequence maxOccurs="unbounded">
        <element name="ControlData" type="dci:ControlDataType"/>
    </sequence>
    <attribute name="RefTargetID" type="IDREF"/>              PREFERENCE
    <attributeGroup ref="dci:ProviderPreference"/>
</complexType>
<element name="ControlData" type="dci:ControlDataType"/>
<complexType name="ControlDataType">
    <sequence>
        <element name="SetBrightness" type="int" minOccurs="0"/>
        <element name="SetColorTemperature" type="int" minOccurs="0"/>
    </sequence>
    <attributeGroup ref="dci:ProviderPreference"/>              PREFERENCE
</complexType>
<attributeGroup name="ProviderPreference">
    <attribute name="Permission" use="optional">
        <simpleType>
            <restriction base="string">
                <enumeration value="Strict"/>
                <enumeration value="Under"/>
                <enumeration value="Over"/>
                <enumeration value="Both"/>
            </restriction>
        </simpleType>
    </attribute>
    <attribute name="Range" use="optional">
        <simpleType>
            <restriction base="unsignedInt">
                <minInclusive value="0"/>
                <maxInclusive value="100"/>
            </restriction>
        </simpleType>
    </attribute>
</attributeGroup>
```

# FIG. 15

FROM STEP S93

S131

IS THERE
PRODUCER
PREFERENCE IN
CORRESPONDING
ELEMENT
?

YES

NO

S134

MOVE TO UPPER
ELEMENT

S132

IS THERE
UPPER ELEMENT
?

YES

NO

S133

USE PRODUCER
PREFERENCE OF DEFAULT

TO STEP S96

# FIG. 16

## (A)

```
<EffectDescription>
  <Effect TargetID="light1"TypeOfEffec="LightEffect">
    <Condition>
      <PermissionFlag>0</PermissionFlag>
      <PermissionType>under</PermissionType>
      <PermissionRange>10</PermissionRange>
    </Condition>
    <InitialEffect>
      <SetBrightness>400<SetBrightness>
      <SetColorTemperature>4000</SetColorTemperature>
    </InitialEffect >
  </Effect>
  <Effect TargetID="light2"TypeOfEffec="LightEffect">
    <Condition>
      <PermissionFlag>1</PermissionFlag>
    </Condition>
    <InitialEffect>
      <SetBrightness>400<SetBrightness>
      <SetColorTemperature>4000</SetColorTemperature>
    </InitialEffect>
  </Effect >
</EffectDescription>
```

## (B)

# FIG. 17

```
<element name="EffectDescription" type="dci:EffectDescriptionType"/>
    <complexType name="EffectDescriptionType">
        <sequence>
            <element name="Effect" type="dci:EffectType" maxOccurs="unbounded"/>
        </sequence>
    </complexType>
    <element name="Effect" type="dci:EffectType"/>
    <complexType name="EffectType">
        <sequence>
            <element name="Condition" type="dci:ConditionType" minOccurs="0"/>
            <element name="InitialEffect" type="dci:ControlDataType" minOccurs="0"/>
        </sequence>
        <attribute name="TargetID" type="ID" use="required"/>
        <attribute name="TypeOfEffect" use="required">
            <simpleType>
                <restriction base="string">
                    <enumeration value="VisualEffect"/>
                    <enumeration value="SoundEffect"/>
                    <enumeration value="WindEffect"/>
                    <enumeration value="TemperatureEffect"/>
                    <enumeration value="LightEffect"/>
                    <enumeration value="ShadingEffect"/>
                    <enumeration value="VibrationEffect"/>
                    <enumeration value="ScentEffect"/>
                </restriction>
            </simpleType>
        </attribute>
    </complexType>
    <element name="Condition" type="dci:ConditionType"/>
    <complexType name="ConditionType">
        <sequence>
            <element name="PermissionFlag" type="unsignedByte"/>
            <element name="PermissionType" minOccurs="0">
                <simpleType>
                    <restriction base="string">
                        <enumeration value="strict"/>
                        <enumeration value="under"/>
                        <enumeration value="over"/>
                        <enumeration value="both"/>
                    </restriction>
                </simpleType>
            </element>
            <element name="PermissionRange" minOccurs="0">
                <simpleType>
                    <restriction base="int">
                        <minInclusive value="0"/>
                        <maxInclusive value="100"/>
                    </restriction>
                </simpleType>
            </element>
        </sequence>
    </complexType>
    <element name="InitialEffect" type="dci:ControlDataType"/>
    <complexType name="ControlDataType">
        <sequence>
            <element name="SetBrightness" type="int" minOccurs="0"/>
            <element name="SetColorTemperature" type="int" minOccurs="0"/>
        </sequence>
    </complexType>
```

# FIG. 18

| Index | Hot (00) | Warm (01) | Moderate (10) | Cool (11) |
|---|---|---|---|---|
| 000000 | [1667,1674) | [2251,2267) | [4171,4203) | [8061,8147) |
| 000001 | [1674,1681) | [2267,2284) | [4203,4235) | [8147,8235) |
| 000010 | [1681,1687) | [2284,2301) | [4235,4268) | [8235,8325) |
| 000011 | [1687,1694) | [2301,2318) | [4268,4301) | [8325,8417) |
| 000100 | [1694,1701) | [2318,2335) | [4301,4334) | [8417,8512) |
| 000101 | [1701,1709) | [2335,2352) | [4334,4369) | [8512,8608) |
| 000110 | [1709,1716) | [2352,2370) | [4369,4403) | [8608,8706) |
| 000111 | [1716,1723) | [2370,2388) | [4403,4439) | [8706,8807) |
| 001000 | [1723,1730) | [2388,2407) | [4439,4475) | [8807,8910) |
| 001001 | [1730,1737) | [2407,2425) | [4475,4511) | [8910,9015) |
| 001010 | [1737,1745) | [2425,2444) | [4511,4548) | [9015,9123) |
| 001011 | [1745,1752) | [2444,2464) | [4548,4586) | [9123,9234) |
| 001100 | [1752,1760) | [2464,2483) | [4586,4624) | [9234,9347) |
| 001101 | [1760,1767) | [2483,2503) | [4624,4663) | [9347,9464) |
| 001110 | [1767,1775) | [2503,2523) | [4663,4703) | [9464,9583) |
| 001111 | [1775,1782) | [2523,2544) | [4703,4743) | [9583,9705) |
| 010000 | [1782,1790) | [2544,2564) | [4743,4784) | [9705,9830) |
| 010001 | [1790,1798) | [2564,2586) | [4784,4826) | [9830,9959) |
| 010010 | [1798,1806) | [2586,2607) | [4826,4868) | [9959,10091) |
| 010011 | [1806,1814) | [2607,2629) | [4868,4912) | [10091,10226) |
| 010100 | [1814,1822) | [2629,2651) | [4912,4956) | [10226,10366) |
| 010101 | [1822,1830) | [2651,2674) | [4956,5000) | [10366,10509) |
| 010110 | [1830,1838) | [2674,2697) | [5000,5046) | [10509,10656) |
| 010111 | [1838,1846) | [2697,2720) | [5046,5092) | [10656,10807) |
| 011000 | [1846,1855) | [2720,2744) | [5092,5140) | [10807,10962) |
| 011001 | [1855,1863) | [2744,2769) | [5140,5188) | [10962,11123) |
| 011010 | [1863,1872) | [2769,2793) | [5188,5237) | [11123,11287) |
| 011011 | [1872,1880) | [2793,2818) | [5237,5287) | [11287,11457) |
| 011100 | [1880,1889) | [2818,2844) | [5287,5338) | [11457,11632) |
| 011101 | [1889,1897) | [2844,2870) | [5338,5390) | [11632,11813) |
| 011110 | [1897,1906) | [2870,2897) | [5390,5443) | [11813,11999) |
| 011111 | [1906,1915) | [2897,2924) | [5443,5497) | [11999,12191] |

| 100000 | [1915,1924) | [2924,2951) | [5497,5552) | [12191,12389) |
| 100001 | [1924,1933) | [2951,2979) | [5552,5609) | [12389,12594) |
| 100010 | [1933,1942) | [2979,3008) | [5609,5666) | [12594,12806) |
| 100011 | [1942,1951) | [3008,3037) | [5666,5725) | [12806,13025) |
| 100100 | [1951,1961) | [3037,3067) | [5725,5785) | [13025,13252) |
| 100101 | [1961,1970) | [3067,3097) | [5785,5846) | [13252,13487) |
| 100110 | [1970,1980) | [3097,3128) | [5846,5908) | [13487,13730) |
| 100111 | [1980,1989) | [3128,3160) | [5908,5972) | [13730,13982) |
| 101000 | [1989,1999) | [3160,3192) | [5972,6037) | [13982,14244) |
| 101001 | [1999,2009) | [3192,3225) | [6037,6104) | [14244,14515) |
| 101010 | [2009,2018) | [3225,3259) | [6104,6172) | [14515,14797) |
| 101011 | [2018,2028) | [3259,3293) | [6172,6241) | [14797,15090) |
| 101100 | [2028,2038) | [3293,3328) | [6241,6313) | [15090,15396) |
| 101101 | [2038,2049) | [3328,3364) | [6313,6385) | [15396,15713) |
| 101110 | [2049,2059) | [3364,3400) | [6385,6460) | [15713,16044) |
| 101111 | [2059,2069) | [3400,3437) | [6460,6536) | [16044,16390) |
| 110000 | [2069,2080) | [3437,3476) | [6536,6615) | [16390,16750) |
| 110001 | [2080,2090) | [3476,3515) | [6615,6695) | [16750,17127) |
| 110010 | [2090,2101) | [3515,3554) | [6695,6777) | [17127,17521) |
| 110011 | [2101,2112) | [3554,3595) | [6777,6861) | [17521,17934) |
| 110100 | [2112,2122) | [3595,3637) | [6861,6947) | [17934,18367) |
| 110101 | [2122,2133) | [3637,3680) | [6947,7035) | [18367,18821) |
| 110110 | [2133,2145) | [3680,3724) | [7035,7126) | [18821,19298) |
| 110111 | [2145,2156) | [3724,3768) | [7126,7219) | [19298,19799) |
| 111000 | [2156,2167) | [3768,3814) | [7219,7314) | [19799,20328) |
| 111001 | [2167,2179) | [3814,3861) | [7314,7412) | [20328,20886) |
| 111010 | [2179,2190) | [3861,3910) | [7412,7513) | [20886,21475) |
| 111011 | [2190,2202) | [3910,3959) | [7513,7616) | [21475,22098) |
| 111100 | [2202,2214) | [3959,4010) | [7616,7722) | [22098,22758) |
| 111101 | [2214,2226) | [4010,4062) | [7722,7832) | [22758,23459) |
| 111110 | [2226,2238) | [4062,4115) | [7832,7944) | [23459,24205) |
| 111111 | [2238,2251) | [4115,4171) | [7944,8061) | [24205,25001] |

# FIG. 19

| Index | WIND SPEED (m/s) |
|-------|------------------|
| 0000 | 0~0.2 |
| 0001 | 0.3~1.5 |
| 0010 | 1.6~3.3 |
| 0011 | 3.4~5.4 |
| 0100 | 5.5~7.9 |
| 0101 | 8.0~10.7 |
| 0110 | 10.8~13.8 |
| 0111 | 13.9~17.1 |
| 1000 | 17.2~20.7 |
| 1001 | 20.8~24.4 |
| 1010 | 24.5~28.4 |
| 1011 | 28.5~32.6 |
| 1100 | 32.7~ |
| 1101 | PROHIBITED |
| 1110 | PROHIBITED |
| 1111 | PROHIBITED |

# FIG. 20

| | TARGET EFFECT | OPERATION AVAILABILITY | RESTRICTION TYPE | RESTRICTION VALUE |
|---|---|---|---|---|
| 1601 | SCENT | FALSE | N/A | N/A |
| 1602 | VIBRATION | TRUE | RangeOfRendering | 10[%] |
| 1603 | LIGHTING | TRUE | DifferenceValue | −50[lx] |

# FIG. 21

EP 2 315 441 A1

# FIG. 22

- 709 LIGHTING DEVICE
- 1703 VIBRATION DEVICE
- 708
- 806 COMMAND ISSUING PORTION
- 1802 CONTROL VALUE DETERMINING PORTION
- 1801 USER PREFERENCE ACQUIRING PORTION
- 802 EFFECT EXTRACTING PORTION
- 801 ANALYZING PORTION (PARSER)

# FIG. 23

```
                    ┌─────────────┐
                    │    START    │
                    └─────────────┘
                           │
  S1901                    ▼
          ┌──────────────────────────┐
          │     ACQUIRE CONTROL       │
          │    DESIGNATION VALUE      │
          └──────────────────────────┘
                           │
  S1902                    ▼
          ┌──────────────────────────┐
          │      ACQUIRE USER         │
          │       PREFERENCE          │
          └──────────────────────────┘
                           │
  S1903                    ▼
                        ◇ DOES
        NO         RESTRICTION
   ◄────────────  TO ADDITIONAL
                   EFFECTS EXIST
                        ?
                           │ YES
  S1904                    ▼
                        ◇ ARE
                     ADDITIONAL         NO
                       EFFECTS      ──────────►
                     EXECUTABLE
                        ?
                           │ YES
  S1905                    ▼
          ┌──────────────────────────┐
          │   CALCULATE CONTROL       │
          │  VALUE OF ADDITIONAL      │
          │       EFFECTS             │
          └──────────────────────────┘
                           │
```

| S1907 | S1906 | S1908 |
|-------|-------|-------|
| ISSUE DESIGNATION VALUE TO DEVICE TO BE CONTROLLED | ISSUE CONTROL VALUE TO DEVICE TO BE CONTROLLED | EXECUTION OF ADDITIONAL EFFECTS IS NOT PERFORMED |

```
                    ┌─────────────┐
                    │     END     │
                    └─────────────┘
```

**(A)**

# FIG. 24

CONTROL DESIGNATION VALUE

LIGHTING : 300lx
VIBRATION : 76db — 2001

PRODUCER → RECEIVER → AV

LIGHTING : 300lx

| INTENDED EFFECT | OPERATION AVAILABILITY | RESTRICTION TYPE | RESTRICTION VALUE | — 2002 |
|---|---|---|---|---|
| VIBRATION | FALSE | N/A | N/A | |

USER PREFERENCE

**(B)**

CONTROL DESIGNATION VALUE

LIGHTING : 300lx
VIBRATION : 76db — 2001

PRODUCER → AV → RECEIVER → AV

LIGHTING : 300lx
VIBRATION : 76db

| INTENDED EFFECT | OPERATION AVAILABILITY | RESTRICTION TYPE | RESTRICTION VALUE | — 2003 |
|---|---|---|---|---|
| VIBRATION | TRUE | RangeOfRendering | 50[%] | |

USER PREFERENCE

# FIG. 25

| INFORMATION TYPE | IDENTIFICATION TAG | VALUE | |
|---|---|---|---|
| TIME INFORMATION | TIMEPOINT | 10:00 PM, 8 HOURS | 2101 |
| TIME INFORMATION | START_END_TIME | 10:00PM—06:00AM | 2102 |
| PLACE INFORMATION | PLACE | TRAIN | 2103 |

**(A)**

CONTROL DESIGNATION VALUE

# FIG. 26

LIGHTING : 300lx
VIBRATION: 76db

11:00PM

LIGHTING : 300lx
VIBRATION: 38db

PRODUCER → AV → RECEIVER → AV →

| INFORMATION TYPE | IDENTIFICATION TAG | VALUE | INTENDED EFFECT | OPERATION AVAILABILITY | RESTRICTION TYPE | RESTRICTION VALUE |
|---|---|---|---|---|---|---|
| TIME INFORMATION | TIMEPOINT | 10:00 PM, 8 HOURS | VIBRATION | TRUE | RangeOfRendering | 50[%] |

USER PREFERENCE

**(B)**

CONTROL DESIGNATION VALUE

LIGHTING : 300lx
VIBRATION: 76db

09:00AM

LIGHTING : 300lx
VIBRATION: 76db

PRODUCER → AV → RECEIVER → AV →

| INFORMATION TYPE | IDENTIFICATION TAG | VALUE | INTENDED EFFECT | OPERATION AVAILABILITY | RESTRICTION TYPE | RESTRICTION VALUE |
|---|---|---|---|---|---|---|
| TIME INFORMATION | TIMEPOINT | 10:00 PM, 8 HOURS | VIBRATION | TRUE | RangeOfRendering | 50[%] |

USER PREFERENCE

EP 2 315 441 A1

# FIG. 27

```
<usp:UserPreferenceDescription>
  <usp:UserIdentifier>
    <mpeg7:Name> John </mpeg7:Name>
  </usp:UserIdentifier>
  <usp:UserEffectPreference>
    <usp:PreferenceCondition>
      <mpeg7:Place>
        <mpeg7:Name>living room</mpeg7:Name>
      </mpeg7:Place>
      <mpeg7:Time>
        <mpeg7:TimePoint>T22:00+09:00</mpeg7:TimePoint>
        <mpeg7:Duration  >PT8H</mpeg7:Duration>
      </mpeg7:Time>
    </usp:PreferenceCondition>
    <usp:EffectCondition TypeOfEffect="VibrationEffect" PermissionOfEffect="true"
    RangeOfEffect="50" RangeType="percentage"/>
  </usp:UserEffectPreference>
</usp:UserPreferenceDescription>
<usp:UserPreferenceDescription>
  <usp:UserIdentifier>
    <mpeg7:Name> Mary </mpeg7:Name>
  </usp:UserIdentifier>
  <usp:UserEffectPreference>
    <usp:PreferenceCondition>
      <mpeg7:Place>
        <mpeg7:Name>Office</mpeg7:Name>
      </mpeg7:Place>
    </usp:PreferenceCondition>
    <usp:EffectCondition TypeOfEffect="LightingEffect" PermissionOfEffect="false"/>
  </usp:UserEffectPreference>
</usp:UserPreferenceDescription>
```

EP 2 315 441 A1

# FIG. 28

```
<element name="USP" type="usp:USPType"/>
<complexType name="USPType">
    <sequence>
        <element name="UserPreferenceDescription" type="usp:UserPreferenceDescriptionType" minOccurs="0"
                                                    maxOccurs="unbounded"/>
    </sequence>
</complexType>
<element name="UserPreferenceDescription" type="usp:UserPreferenceDescriptionType"/>
<complexType name="UserPreferenceDescriptionType">
    <sequence>
        <element name="UserIdentifier" type="mpeg7:UserIdentifierType" minOccurs="0" maxOccurs="unbounded"/>
        <element name="UserEffectPreference" type="usp:UserEffectPreferenceType" maxOccurs="unbounded"/>
    </sequence>
</complexType>
<element name="UserEffectPreference" type="usp:UserEffectPreferenceType"/>
<complexType name="UserEffectPreferenceType">
    <sequence>
        <element name="PreferenceCondition" type="mpeg7:PreferenceConditionType" minOccurs="0" maxOccurs="unbounded"/>
        <element name="EffectCondition" type="usp:EffectConditionType" maxOccurs="unbounded"/>
    </sequence>
</complexType>

<element name="EffectCondition" type="usp:EffectConditionType"/>
<complexType name="EffectConditionType">
    <attribute name="TypeOfEffect" use="required">
        <simpleType>
            <restriction base="string">
                <enumeration value="LightingEffect"/>
                <enumeration value="VibrationEffect"/>
            </restriction>
        </simpleType>
    </attribute>
    <attribute name="PermissionOfEffect" type="boolean" use="required"/>
    <attributeGroup ref="usp:RangeOfEffectGrp"/>
</complexType>

<attributeGroup name="RangeOfEffectGrp">
    <attribute name="RangeOfEffect" use="optional" default="10">
        <simpleType>
            <restriction base="unsignedInt">
                <minInclusive value="0"/>
                <maxInclusive value="200"/>
            </restriction>
        </simpleType>
    </attribute>
    <attribute name="RangeType" use="optional" default="percentage">
        <simpleType>
            <restriction base="string">
                <enumeration value="percentage"/>
                <enumeration value="difference_value"/>
            </restriction>
        </simpleType>
    </attribute>
</attributeGroup>
```

# FIG. 29

(A)

| FILTERINGTYPE | INTENDED EFFECT |
|---|---|
| Allow | VIBRATION, SCENT |

(B)

| FILTERINGTYPE | INTENDED EFFECT |
|---|---|
| Deny | LIGHTING |

(C)

CONTROL DESIGNATION VALUE

LIGHTING : 300lx
VIBRATION : 76db  ～2501

VIBRATION
38db

PRODUCER → AV → RECEIVER → AV →

| FILTERINGTYPE | INTENDED EFFECT | ～2502 |
|---|---|---|
| Allow | VIBRATION, SCENT | |

| INTENDED EFFECT | OPERATION AVAILABILITY | RESTRICTION TYPE | RESTRICTION VALUE | ～2503 |
|---|---|---|---|---|
| VIBRATION | TRUE | RangeOfRendering | 50[%] | |

USER PREFERENCE

(D)

| FILTERINGTYPE | IDENTIFICATION TAG | VALUE | INTENDED EFFECT |
|---|---|---|---|
| Allow | TIMEPOINT | 10:00 PM, 8 HOURS | VIBRATION, SCENT |

## INTERNATIONAL SEARCH REPORT

| | International application No. |
|---|---|
| | PCT/JP2009/062736 |

A. CLASSIFICATION OF SUBJECT MATTER
*H04N7/173(2006.01)i*

According to International Patent Classification (IPC) or to both national classification and IPC

B. FIELDS SEARCHED

Minimum documentation searched (classification system followed by classification symbols)
H04N7/173

Documentation searched other than minimum documentation to the extent that such documents are included in the fields searched
Jitsuyo Shinan Koho          1922-1996    Jitsuyo Shinan Toroku Koho    1996-2009
Kokai Jitsuyo Shinan Koho    1971-2009    Toroku Jitsuyo Shinan Koho    1994-2009

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2001-078117 A (Matsushita Electric Industrial Co., Ltd.), 23 March, 2001 (23.03.01), Full text; all drawings (Family: none) | 1-51 |
| A | JP 2007-006461 A (Sharp Corp.), 11 January, 2007 (11.01.07), Full text; all drawings (Family: none) | 1-51 |
| A | JP 2008-005297 A (Fuji Photo Film Co., Ltd.), 10 January, 2008 (10.01.08), Full text; all drawings (Family: none) | 1-51 |

☒ Further documents are listed in the continuation of Box C.      ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 03 August, 2009 (03.08.09) | 11 August, 2009 (11.08.09) |

| Name and mailing address of the ISA/ | Authorized officer |
|---|---|
| Japanese Patent Office | |
| Facsimile No. | Telephone No. |

Form PCT/ISA/210 (second sheet) (April 2007)

| | INTERNATIONAL SEARCH REPORT | International application No. |
|---|---|---|
| | | PCT/JP2009/062736 |

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2001-343900 A  (Matsushita Electric Industrial Co., Ltd.), 14 December, 2001 (14.12.01), Full text; all drawings (Family: none) | 1-51 |
| A | JP 2000-173783 A  (Matsushita Electric Industrial Co., Ltd.), 23 June, 2000 (23.06.00), Full text; all drawings & US 6611297 B1          & WO 1999/053728 A1 | 1-51 |
| A | JP 2003-324402 A  (Nippon Hoso Kyokai), 14 November, 2003 (14.11.03), Full text; all drawings (Family: none) | 1-51 |

Form PCT/ISA/210 (continuation of second sheet) (April 2007)

## INTERNATIONAL SEARCH REPORT

| International application No. |
| --- |
| PCT/JP2009/062736 |

**Box No. II    Observations where certain claims were found unsearchable (Continuation of item 2 of first sheet)**

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

**Box No. III    Observations where unity of invention is lacking (Continuation of item 3 of first sheet)**

This International Searching Authority found multiple inventions in this international application, as follows:

The invention in claims 1-43 are that, when data for controlling audio-visual environment is transmitted or received, audio-visual environment control data is used, wherein the audio-visual environment control data includes a control designation value for a peripheral device and producer's preference information indicative of an acceptable error range for the control designation value.
    (continued to extra sheet)

1. ☐ As all required additional search fees were timely paid by the applicant, this international search report covers all searchable claims.

2. ☒ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant.    Consequently, this international search report is restricted to the invention first mentioned in the claims; it is covered by claims Nos.:

**Remark on Protest**    ☐ The additional search fees were accompanied by the applicant's protest and, where applicable,
the                            payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (April 2007)

**INTERNATIONAL SEARCH REPORT**

| International application No. |
| --- |
| PCT/JP2009/062736 |

Continuation of Box No.III of continuation of first sheet(2)

The inventions in claims 44-51 are that, when data for controlling audio-visual environment is received, user preference data on the reception side is used, wherein the user preference data includes operability information for a peripheral device and/or limit information for the control designation value.

Form PCT/ISA/210 (extra sheet) (April 2007)

**REFERENCES CITED IN THE DESCRIPTION**

**Patent documents cited in the description**

- JP 2000173783 A

- JP 2001343900 A